# EUROPÄISCHE PATENTSCHRIFT

(11) **EP 1 860 938 B1**
(45) Veröffentlichungstag und Bekanntmachung des Hinweises auf die Patenterteilung: **13.05.2015**
(21) Anmeldenummer: 06723297.5
(22) Anmeldetag: 08.03.2006
(51) Int. Cl.: A01N 25/04, A01N 25/26, A01N 25/28, A01N 43/36, A01N 53/00, B27K 5/00

(54) **WÄSSRIGE INSEKTIZID-ZUSAMMENSETZUNG UND DEREN VERWENDUNG ZUM SCHUTZ LIGNOCELLULOSEHALTIGER MATERIALIEN**
AQUEOUS INSECTICIDAL COMPOSITIONS AND THE USE THEREOF FOR PROTECTING LIGNOCELLULOSE-CONTAINING MATERIALS
COMPOSITIONS INSECTICIDES AQUEUSES ET LEUR UTILISATION POUR PROTÉGER LES MATIÈRES CONTENANT DE LA LIGNOCELLULOSE

(30) Priorität: 09.03.2005 DE 102005010874
(43) Veröffentlichungstag der Anmeldung: 05.12.2007
(73) Patentinhaber: BASF SE, 67056 Ludwigshafen (DE)
(72) Erfinder: AMRHEIN, Patrick, 65239 Hochheim (DE); KLEIST, Gunnar, 76534 Baden-Baden (DE); HAENTZSCHEL, Dirk, 33449 Langenberg (DE); HABICHT, Joerg, 76547 Sinzheim (DE); SCHÖPKE, Holger, 69151 Neckargemünd (DE)
(86) Internationale Anmeldenummer: PCT/EP2006/002143
(87) Internationale Veröffentlichungsnummer: WO 2006/094792

(56) Entgegenhaltungen:
- EP-A- 0 286 009
- WO-A-00/05276
- WO-A-00/05283
- WO-A-2005/102044
- WO-A-2006/015791
- US-A- 3 400 093
- DATABASE WPI Section Ch, Week 200455 Derwent Publications Ltd., London, GB; Class A14, AN 2004-562832 XP002388007 & CN 1 491 541 A (UNIV HEBEI SCI & TECHNOLOGY) 28. April 2004 (2004-04-28)

## Beschreibung

Die vorliegende Erfindung betrifft wässrige Insektizid-Zusammensetzungen in Form einer wässrigen Dispersion feinteiliger, wenigstens einen insektiziden organischen Wirkstoff mit einer Wasserlöslichkeit von nicht mehr als 5 g/l bei 25 °C/1013 mbar enthaltender Polymerpartikel und die Verwendung derartiger wässriger Insektizid-Zusammensetzungen zum Schutz lignocellulosehaltiger Materialien, insbesondere Holz, vor einem Befall mit Schadinsekten.

Bei Werkstoffen auf Basis lignocellulosehaltiger Materialien, insbesondere auf Basis von Holz, besteht bekanntermaßen die Gefahr eines Befalls mit Schadinsekten, beispielsweise holzzerstörenden Käfern, Ameisen und/oder Termiten. Da ein Befall zu einer Beschädigung und im Extremfall zu einer vollständigen Zerstörung des Werkstoffs führen kann, werden umfangreiche Anstrengungen zum Schutz derartiger Werkstoffe vor einem Befall unternommen.

Klassische Holzschutzmittel auf Basis von Teerölen, wie Carbolineum, sind auf Grund ihres Eigengeruchs und ihrer potenziellen Karzinogenität wenig attraktiv. Daher setzt man zu diesem Zweck heute definierte organische Wirkstoffe ein. Da es sich bei diesen Wirkstoffen üblicherweise um in Wasser unlösliche Substanzen handelt, werden diese in der Regel als Lösungen in organischen Lösungsmitteln formuliert (siehe Ullmann's Encyclopedia of E.H. Pommer, "Wood, Preservation" Kapitel 2, in Ullmann's Encyclopedia of Industrial Chemistry, 5th ed. on CD-ROM, Wiley-VCH Weinheim 1997). Der Einsatz von Lösungsmitteln ist jedoch mit zusätzlichen Kosten verbunden und zudem aus arbeitshygienischen Gründen sowie aus Gründen des Umweltschutzes nicht erwünscht. Zudem besteht die Gefahr, dass die Wirkstoffe unter Witterungseinflüssen ausgewaschen werden (Leaching), so dass die Witterungsbeständigkeit derartiger Insektizid-Ausrüstungen häufig nicht zufriedenstellend ist.

Aus der US 3,400,093 sind wässrige, insektizid-haltige Polymerdispersionen bekannt, die durch Emulsionspolymerisiation ethylenisch ungesättigter Monomere hergestellt werden, wobei die zur Polymerisation eingesetzten Monomere einen wasserunlöslichen insektiziden Wirkstoff gelöst enthalten. Die dort beschriebenen insektizid-haltigen Polymerdispersionen werden zur Herstellung wasserbasierter Beschichtungsmittel wie Dispersionsfarben eingesetzt und sollen so eine insektizide Ausrüstung des Anstrichs gewährleisten. Für den Schutz von Holz sind diese Polymerdispersionen jedoch nicht geeignet.

Die ältere deutsche Patentanmeldung 102004020332.6 beschreibt wässrige Wirkstoffzusammensetzungen, enthaltend wenigstens einen fungiziden organischen Wirkstoff mit einer Wasserlöslichkeit von nicht mehr als 5 g/l bei 25 °C/1013 mbar und ein feinteiliges Polymerisat mit einer mittleren Teilchengröße, bestimmt durch dynamische Lichtstreuung, von nicht mehr als 300 nm, wobei die Polymerteilchen des feinteiligen Polymerisats den Wirkstoff enthalten und wobei das Polymerisat überwiegend aus ethylenisch ungesättigten Monomeren mit einer Wasserlöslichkeit von nicht mehr als 30 g/l bei 25 °C aufgebaut ist. Diese Wirkstoffzusammensetzungen sind zum Schutz von Holz vor holzschädigenden Pilzen geeignet.

Die ältere deutsche Patentanmeldung 102004037850.9 (WO 2006/015791 A2, relevant unter Art. 54(3) EPÜ) beschreibt wässrige Wirkstoffzusammensetzungen, enthaltend wenigstens einen organischen Pflanzenschutz-Wirkstoff, z. B. einen Insektizid-, Fungizid-, Akarizid- oder Herbizid-Wirkstoff mit einer Wasserlöslichkeit von nicht mehr als 5 g/l bei 25 °C/1013 mbar und ein feinteiliges Polymerisat, wobei die Wirkstoffzusammensetzungen erhältlich sind durch ein mehrstufiges Emulsionspolymerisationsverfahren in einer wässrigen Suspension der festen Wirkstoffpartikel, wobei die Wirkstoffpartikel in der Suspension eine mittlere Teilchengröße, bestimmt durch dynamische Lichtstreuung, von nicht mehr als 1200 nm aufweisen. Auf diese Weise werden Polymer-Wirkstoffpartikel erhalten, in denen der teilchenförmige Wirkstoff von dem Emulsionspolymerisat umhüllt vorliegt.

Die EP 0 286 009 beschreibt wässrige, kationische Kunststoffdispersionen mit biozider Wirkung, die sich durch Emulsionspolymerisation ethylenisch ungesättigter Monomere herstellen lassen und die biozide kationisch-tensioaktive, quaternäre organische Ammoniumverbindungen enthalten. Die auf diese Weise hergestellten Dispersionen dienen als fungizide, bakterizide und algizide Ausrüstungsmittel, die zum Schutz von Holz vor Mikroorganismen eingesetzt werden können.

Der vorliegenden Erfindung liegt daher die Aufgabe zu Grunde, wässrige Zusammensetzungen von insektiziden Wirkstoffen mit geringer Wasserlöslichkeit, d.h. einer Löslichkeit in Wasser von weniger als 5 g/l, insbesondere weniger als 1g/l bei 25 °C/1013 mbar, bereitzustellen, die in vorteilhafter Weise für den Schutz lignocellulosehaltiger Materialien, insbesondere von Holz, vor Befall mit holzschädigenden Insekten geeignet sind. Die Zusammensetzungen sollten insbesondere nur geringe Mengen oder keine flüchtigen organischen Verbindungen wie organische Lösungsmittel enthalten. Zudem sollte der Wirkstoff aus den behandelten Materialien auch bei Einwirkung von Wasser nicht oder nicht in nennenswertem Umfang ausgewaschen werden. Ferner sollten die wässrigen Wirkstoffzusammensetzungen eine bessere Stabilität aufweisen als konventionelle Suspensionen oder Mikroemulsionen organischer Wirkstoffe.

Es wurde überraschenderweise gefunden, dass diese Aufgabe durch eine wässrige Wirkstoffzusammensetzung gelöst wird, in welcher der in Wasser nicht oder nur geringfügig lösliche, insektizide Wirkstoff in den Polymerteilchen eines feinteiligen, wasserunlöslichen Polymerisats vorliegt, dessen Polymerteilchen eine mittlere Teilchengröße, bestimmt durch dynamische Lichtstreuung, von nicht mehr als 500 nm und eine kationische Oberflächenladung aufweisen und die wässrige Dispersion der wirkstoffhaltigen Polymerpartikel erhältlich ist durch radikalische wässrige Emulsionspolymerisation einer Monomerzusammensetzung ethylenisch ungesättigter Monomere M, worin die ethylenisch ungesättigten Monomere M den wenigstens einen insektiziden Wirkstoff in gelöster Form enthalten.

Die Erfindung betrifft somit eine Insektizid-Zusammensetzung in Form einer wässrigen Dispersion feinteiliger, wenigstens einen insektiziden organischen Wirkstoff mit einer Wasserlöslichkeit von nicht mehr als 5 g/l bei 25 °C/1013 mbar enthaltender Polymerpartikel mit einer mittleren Teilchengröße, bestimmt durch dynamische Lichtstreuung, von nicht mehr als 500 nm, insbesondere nicht mehr als 300 nm, wobei die den wenigstens einen insektiziden Wirkstoff enthaltenden Polymerpartikel eine kationische Oberflächenladung aufweisen und die wässrige Dispersion der wirkstoffhaltigen Polymerpartikel erhältlich ist durch radikalische wässrige Emulsionspolymerisation einer Monomerzusammensetzung ethylenisch ungesättigter Monomere M, worin die ethylenisch ungesättigten Monomere M den wenigstens einen insektiziden Wirkstoff in gelöster Form enthalten.

Bei den erfindungsgemäßen Zusammensetzungen handelt es sich um stabile wässrige Zubereitungen von in Wasser nicht oder nur geringfügig löslichen, insektiziden Wirkstoffen, die grundsätzlich für alle Anwendungen geeignet sind, bei denen man einen wirksamen Schutz von Materialien vor Befall mit Schadinsekten wie holzschädigenden Käfern, Ameisen oder Termiten erreichen will. Trotz des Einbaus des insektiziden, organischen Wirkstoffs in eine polymere Matrix ist die für einen wirksamen Schutz erforderliche Aufwandmenge an Wirkstoff nicht höher und in einigen Fällen sogar geringer als bei Einsatz konventioneller Lösungsmittel-basierter Wirkstoffzubereitungen. Zudem wird das Eindringen des Wirkstoffs in das lignocellulosehaltige Material verbessert, so dass der Schutz auch bei Bearbeitung oder Zerstörung der Oberfläche des Materials erhalten bleibt. Zudem erzielt man mit diesen Zusammensetzungen Insektizid-Ausrüstungen von Materialien, die sich durch eine hohe Witterungsbeständigkeit auszeichnen und die in geringerem Maße zu einem Ausbluten neigen. Die vorliegende Erfindung betrifft daher auch die Verwendung derartiger wässriger Zusammensetzungen für die Bekämpfung von Insekten, insbesondere für die Bekämpfung von holzschädigenden Insekten wie Termiten, Ameisen und holzzerstörenden Käfern. Der Begriff der Bekämpfung umfasst hier und im Folgenden eine Verhinderung oder eine Vermeidung eines Befalls mit Schadinsekten sowie die Abtötung der Insekten in befallenen Materialien.

Die erfindungsgemäßen Zusammensetzungen sind in besonderer Weise zur Bekämpfung von Schadinsekten in Holz und anderen lignocellulosehaltigen Materialien und insbesondere zum Schutz dieser Materialien vor einem Befall mit Schadinsekten geeignet. Daher betrifft eine besondere Ausführungsform der Erfindung die Verwendung derartiger Zusammensetzungen zum Schutz von lignocellulosehaltigen Materialien, insbesondere von Holz, gegen einen Befall mit Schadinsekten, insbesondere gegen einen Befall mit holzschädigenden Insekten wie holzschädigenden Käfern, Ameisen oder Termiten, sowie die Abtötung der Schadinsekten in befallenem Material.

Die erfindungsgemäßen wässrigen Zusammensetzungen sind jedoch auch für andere Anwendungen geeignet, in denen eine Bekämpfung von Schadinsekten gewünscht wird, beispielsweise im Pflanzenschutz zur Bekämpfung pflanzenschädigender Insekten, bei der Behandlung von Saatgut und als Bodenbehandlungsmittel.

Die hier angegebenen Teilchengrößen des feinteiligen Polymerisats sind gewichtsmittlere Teilchengrößen, wie sie durch dynamische Lichtstreuung ermittelt werden können. Verfahren hierzu sind dem Fachmann geläufig, beispielsweise aus H. Wiese in D. Distler, Wässrige Polymerdispersionen, Wiley-VCH 1999, Kapitel 4.2.1, S. 40ff und dort zitierte Literatur sowie H. Auweter, D. Horn, J. Colloid Interf. Sci. 105 (1985) 399, D. Lilge, D. Horn, Colloid Polym. Sci. 269 (1991) 704 oder H. Wiese, D. Horn, J. Chem. Phys. 94 (1991) 6429. Die mittlere Teilchengröße liegt vorzugsweise im Bereich von 10 bis 300 nm, insbesondere im Bereich von 20 bis 250 nm, besonders bevorzugt im Bereich von 30 bis 200 nm und ganz besonders bevorzugt im Bereich von 30 bis 150 nm.

In den erfindungsgemäßen Zusammensetzungen weisen die Polymerisatteilchen eine positive Oberflächenladung auf, d.h. sie weisen an ihrer Oberfläche positive Ladungen auf, die etwaige vorhandene negative Ladungen kompensieren. Eine derartige Oberflächenladung lässt sich bekanntermaßen z.B. dadurch erreichen, dass die zu polymerisierenden Monomere M kationische Monomere und/oder Monomere mit wenigstens einer in Wasser protonierbaren Gruppe umfassen (Monomere M-k). Eine positive Oberflächenladung lässt sich bekanntermaßen auch dadurch erreichen, dass man die Emulsionspolymerisation in Gegenwart oberflächenaktiver Substanzen wie Tensiden und Schutzkolloiden durchführt, die ihrerseits positiv geladen sind und/oder wenigstens eine funktionelle Gruppe aufweisen, die in Wasser protonierbar ist (vergleiche US 5,874,524). Derartige Substanzen werden im Folgenden auch als oberflächenaktive Subtanzen O-k bezeichnet. Es versteht sich von selber, dass man die kationischen bzw. protonierbaren Monomere M-k und/oder die oberflächenaktiven Substanzen O-k in einer Menge einsetzt, dass die hierdurch eingebrachten positiven Ladungen dieser Substanzen etwaige negative Ladungen oder saure, d.h. deprotonierbare, Gruppen in den zur Polymerisation eingesetzten Monomeren und oberflächenaktiven Substanzen überwiegen. Ohne sich auf eine Theorie beschränken zu wollen, nimmt man an, dass in den erfindungsgemäßen Zusammensetzungen der in Wasser nicht oder schlecht lösliche insektizide, organische Wirkstoff in der von den Monomeren M gebildeten Polymermatrix in fein verteilter Form vorliegt. Die Oberflächenladung lässt sich abschätzen über das Verhältnis von Gesamtmenge der polymerisierten Monomere M und Wirkstoff zu der Gesamtmenge an kationischen Monomeren M-k und oberflächenaktiver Substanz O-k, abzüglich Säuregruppen aufweisender Monomere und abzüglich anionischer oberflächenaktiver Substanzen. Vorzugsweise werden die Monomere M-k bzw. die oberflächenaktive Substanz in einer Menge eingesetzt, dass der Überschuss kationischer Ladungen, bzw. basischer Gruppen im Polymerisat wenigstens 0,02 mol pro kg Polymerisat+Wirkstoff und insbesondere im Bereich von 0,05 bis 1,5 mol pro kg Polymerisat+Wirkstoff beträgt.

Die hier angegebenen Werte für den Überschuss kationischer Ladungen entsprechen der Differenz zwischen der Menge an kationischer Ladung, die aus den kationischen bzw. basischen Bestandteilen des Polymerisats resultieren, und der Menge an anionischer Ladung, die aus den anionischen bzw. sauren Bestandteilen des Polymerisats resultieren. Der kationische Ladungsüberschuss ist dabei der kationischen Oberflächenladung gleichzusetzen. Kationische bzw. basische Bestandteile des Polymerisats sind hierbei sowohl die zur Herstellung eingesetzten kationischen bzw. basischen Monomere als auch kationische bzw. basische oberflächenaktive Substanzen. Dementsprechend sind anionische Bestandteile des Polymerisats sowohl die zur Herstellung eingesetzten anionischen bzw. sauren Monomere als auch die anionische bzw. sauren oberflächenaktiven Substanzen.

Als Monomere M kommen grundsätzlich alle ethylenisch ungesättigten Monomere in Betracht, die nach der Methode einer wässrigen Emulsionspolymerisation polymerisiert werden können. In der Regel umfasst daher die Monomermischung überwiegend monoethylenisch ungesättigten Monomere, die in Wasser nicht oder schlecht löslich sind, d.h. deren Löslichkeit in Wasser nicht mehr als 30 g/l (bei 25°C und 1013 mbar) beträgt. Diese Monomere werden im Folgenden auch als Monomere M1 bezeichnet. Insbesondere liegt die Wasserlöslichkeit der Monomere M1 unter diesen Bedingungen bei 0,1 bis 20 g/l. Ihr Anteil an den Monomeren M beträgt üblicherweise wenigstens 60 Gew.-%, insbesondere wenigstens 70 Gew.-%, bevorzugt wenigstens 80 Gew.-%, z.B. 60 bis 100 Gew.-%, vorzugsweise 70 bis 99,5 Gew.-%, insbesondere 75 bis 99,5 Gew.-%, besonders bevorzugt 80 bis 99 gew.-% und speziell 90 bis 98 Gew.-%.

Zu den Monomeren M1 zählen vinylaromatische Monomere wie Styrol, α-Methylstyrol, tert.-Butylstyrol und Vinyltoluol, Ester α,β-monoethylenisch ungesättigter Mono- und Dicarbonsäuren mit 3 bis 8 und insbesondere 3 oder 4 C-Atomen mit C₁-C₁₀-Alkanolen oder mit C₅-C₈-Cycloalkanolen, insbesondere die Ester der Acrylsäure, der Methacrylsäure, der Crotonsäure, die Diester der Maleinsäure, der Fumarsäure und der Itaconsäure und besonders bevorzugt die Ester der Acrylsäure mit C₂-C₁₀-Alkanolen (= C₂-C₁₀-Alkylacrylate) wie Ethylacrylat, n-Butylacrylat, Isobutylacrylat, tert.-Butylacrylat, n-Hexylacrylat, 2-Ethylhexylacrylat und 3-Propylheptylacrylat und die Ester der Methacrylsäure mit C₁-C₁₀-Alkanolen wie Methylmethacrylat, Ethylmethacrylat, n-Butylmethacrylat, Isobutylmethacrylat, tert.-Butylmethacrylat, n-Hexylmethacrylat und dergleichen. Geeignete Monomere M1 sind außerdem Vinyl- und Allylester aliphatischer Carbonsäuren mit 3 bis 10 C-Atomen, beispielsweise Vinylpropionat sowie die Vinylester der Versatic®-Säuren (Vinylversatate), Vinylhalogenide wie Vinylchlorid und Vinylidenchlorid, konjugierte Diolefine wie Butadien und Isopren sowie C₂-C₆-Olefine wie Ethylen, Propen, 1-Buten und n-Hexen. Bevorzugte Monomere M1 sind vinylaromatische Monomere, C₂-C₁₀-Alkylacrylate, insbesondere C₂-C₈-Alkylacrylate, speziell tert.-Butylacrylat sowie C₁-C₁₀-Alkylmethacrylate und insbesondere C₁-C₄-Alkylmethacrylate. Insbesondere sind wenigstens 50 Gew.-% der Monomere M1 ausgewählt unter vinylaromatischen Monomeren, insbesondere Styrol, Estern der Methacrylsäure mit C₁-C₄-Alkanolen, insbesondere Methylmethacrylat und tert.-Butylacrylat und bis zu 50 Gew.-% der Monomere M1 unter davon verschiedenen Monomeren M1, speziell unter C₂-C₈-Alkylacrylaten. Besonders bevorzugte Monomere M1 sind vinylaromatische Monomere, speziell Styrol, und Mischungen von vinylaromatischen Monomeren mit den vorgenannten C₂-C₈-Alkylacrylaten und/oder C₁-C₄-Alkylmethacrylaten, insbesondere solche Mischungen mit einem Anteil an Vinylaromaten von wenigstens 60 Gew.-%, z.B. 60 bis 95 Gew.-%, bezogen auf die Gesamtmenge der Monomere M1.

Besonders bevorzugte Monomere M1 sind auch C₁-C₄-Alkylmethacrylate, speziell Methylmethacrylat und Mischungen von C₁-C₄-Alkylmethacrylate mit C₂-C₄-Alkylacrylaten und/oder Vinylaromaten, insbesondere Mischungen mit einem Anteil an C₁-C₄-Alkylmethacrylaten, speziell Methylmethacrylat, von wenigstens 60 Gew.-%, z.B. 60 bis 95 Gew.-%, bezogen auf die Gesamtmenge der Monomere M1.

In einer ersten Ausführungsform der Erfindung umfassen daher die Monomere M wenigstens ein monoethylenisch ungesättigtes Monomer M-k, das wenigstens eine kationische Gruppe und/oder wenigstens eine im Wässrigen protonierbare Gruppe aufweist. Die Menge an Monomer M-k liegt dann typischerweise im Bereich von 0,1 bis 30 Gew.-%, insbesondere im Bereich von 0,5 bis 20 Gew.-% und speziell im Bereich von 1 bis 15 Gew.-%, bezogen auf die Gesamtmenge der Monomere M,

Geeignete Monomere M-k sind solche, die eine protonierbare Aminogruppe, eine quartäre Ammoniumgruppe, eine protonierbare Iminogruppe oder eine quaternisierte Iminogruppe aufweisen. Beispiele für Monomere mit einer protonierbaren Iminogruppe sind N-Vinylimidazol und Vinylpyridine. Beispiele für Monomere mit einer quaternisierten Iminogruppe sind N-Alkylvinylpyridiniumsalze und N-Alkyl-N'-vinylimidazoliniumsalze wie N-Methyl-N'-vinylimidazoliniumchlorid oder Metosulfat.

Unter den Monomeren M-k werden insbesondere die Monomere der allgemeinen Formel I bevorzugt 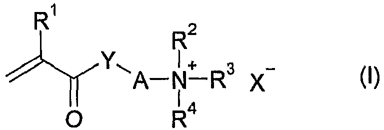 worin
- R¹: Wasserstoff oder C₁-C₄-Alkyl, insbesondere Wasserstoff oder Methyl,
- R², R³: unabhängig voneinander C₁-C₄-Alkyl, insbesondere Methyl, und
- R⁴: Wasserstoff oder C₁-C₄-Alkyl, insbesondere Wasserstoff oder Methyl bedeuten,
- Y: für Sauerstoff, NH oder NR⁵ mit R⁵ = C₁-C₄-Alkyl steht,
- A: für C₂-C₈-Alkylen, z. B. 1,2-Ethandiyl, 1,2- oder 1,3-Propandiyl, 1,4-Butandiyl oder 2-Methyl-1,2-propandiyl, das gegebenenfalls durch 1, 2 oder 3 nicht benachbarte Sauerstoffatome unterbrochen ist, steht und
- X⁻: für ein Anionenäquivalent, z. B. für Halogenid wie Cl⁻, BF₄⁻, HSO₄⁻, ½ SO₄²⁻ oder CH₃OSO₃⁻ etc. steht,
und für R⁴ = H die freien Basen der Monomere der Formel I.

Beispiele für Monomere der Formel I sind 2-(N,N-Dimethylamino)ethylacrylat,
2-(N,N-Dimethylamino)ethylmethacrylat, 2-(N,N-Dimethylamino)ethylacrylamid,
3-(N,N-Dimethylamino)propylacrylamid, 3-(N,N-Dimethylamino)propylmethacrylamid,
2-(N,N-Dimethylamino)ethylmethacrylamid,
2-(N,N,N-Trimethylammonium)ethylacrylat-Chlorid,
2-(N,N,N-Trimethylammonium)ethylmethacrylat-Chlorid,
2-(N,N,N-Trimethylammonium)ethylmethacrylamid-Chlorid,
3-(N,N,N-Trimethylammonium)propylacrylamid-Chlorid,
3-(N,N,N-Trimethylammonium)propylmethacrylamid-Chlorid,
2-(N,N,N-Trimethylammonium)ethylacrylamid-Chlorid, sowie die entsprechenden Hydrogensulfate, Metosulfate, Tetrafluoroborate und Sulfate.

Neben den Monomeren M1 und den gegebenenfalls anwesenden Monomeren M-k können die Monomere M auch davon verschiedene ethylenisch ungesättigte Monomere M2 umfassen. Zu den Monomeren M2 zählen:
monoethylenisch ungesättigte Monomere M2a, die wenigstens eine Säuregruppe oder wenigstens eine anionische Gruppen aufweisen, insbesondere Monomere M2a, die eine Sulfonsäuregruppe, eine Phosphonsäuregruppe oder ein oder zwei Carbonsäuregruppen aufweisen, sowie die Salze der Monomere M2a, insbesondere die Alkalimetallsalze, z. B. die Natrium- oder Kaliumsalze sowie die Ammoniumsalze. Zu den Monomeren M2a zählen ethylenisch ungesättigte Sulfonsäuren, insbesondere Vinylsulfonsäure, 2-Acrylamido-2-methylpropansulfonsäure, 2-Acryloxyethansulfonsäure und 2-Methacryloxyethansulfonsäure, 3-Acryloxy- und 3-Methacryloxypropansulfonsäure, Vinylbenzolsulfonsäure und deren Salze, ethylenisch ungesättigte Phosphonsäuren, wie Vinylphosphonsäure und Vinylphosphonsäuredimethylester und deren Salze und α,β-ethylenisch ungesättigte C₃-C₈-Mono- und C₄-C₈-Dicarbonsäuren, insbesondere Acrylsäure, Methacrylsäure, Crotonsäure, Maleinsäure, Fumarsäure und Itaconsäure. Der Anteil der Monomere M2a wird häufig nicht mehr als 10 Gew.-%, vorzugsweise nicht mehr als 5 Gew.-%, z. B. 0,1 bis 10 Gew.-% und insbesondere 0,2 bis 5 Gew.-%, bezogen auf die Gesamtmenge der Monomere M, ausmachen, wobei der Anteil der Monomere M2a so gewählt wird, dass die von den Monomeren M2a beigesteuerte anionische Ladung die von den oberflächenaktiven Substanzen bzw. den Monomeren M-k beigesteuerte kationische Ladung nicht übersteigt. In einer besonders bevorzugten Ausführungsform umfassen die Monomere M keine oder weniger als 0,1 Gew.-% Monomere M2a;
monoethylenisch ungesättigte, neutrale Monomere M2b, die eine Wasserlöslichkeit von wenigstens 50 g/l bei 25 °C und insbesondere wenigstens 100 g/l bei 25 °C aufweisen. Beispiele hierfür sind die Amide der vorgenannten ethylenisch ungesättigten Carbonsäuren, insbesondere Acrylamid und Methacrylamid, ethylenisch ungesättigte Nitrile wie Methacrylnitril und Acrylnitril, Hydroxyalkylester der vorgenannten α,β-ethylenisch ungesättigten C₃-C₈-Monocarbonsäuren und der C₄-C₈-Dicarbonsäuren, insbesondere Hydroxyethylacrylat, Hydroxyethylmethacrylat, 2- und 3-Hydroxypropylacrylat, 2- und 3-Hydroxypropylmethacrylat, Ester der vorstehend genannten monoethylenisch ungesättigten Mono- und Dicarbonsäuren mit C₂-C₄-Polyalkylenglykolen, insbesondere die Ester dieser Carbonsäuren mit Polyethylenglykol oder Alkyl-Polyethylenglykolen, wobei der (Alkyl)polyethylenglykol-Rest üblicherweise ein Molekulargewicht im Bereich von 100 bis 3000 aufweist. Zu den Monomeren M2b zählen weiterhin N-Vinylamide aliphatischer C₁-C₁₀-Carbonsäuren und N-Vinyllactame wie N-Vinylformamid, N-Vinylacetamid, N-Vinylpyrrolidon und N-Vinylcaprolactam. Der Anteil der Monomere M2b wird vorzugsweise nicht mehr als 30 Gew.-%, und insbesondere nicht mehr als 20 Gew.-%, z. B. 0,1 bis 20 und insbesondere 0,5 bis 10 Gew.-%, bezogen auf die Gesamtmenge der Monomere M, ausmachen;
Monomere M2c, die zwei oder mehrere, nichtkonjugierte ethylenisch ungesättigte Doppelbindungen aufweisen. Ihr Anteil macht üblicherweise nicht mehr als 5 Gew.-%, insbesondere nicht mehr als 2 Gew.-%, z. B. 0,01 bis 2 Gew.-% und insbesondere 0,05 bis 1,5 Gew.-%, bezogen auf die Gesamtmenge der Monomere M aus. In einer besonders bevorzugten Ausführungsform umfassen die Monomere M keine oder weniger als 0,05 Gew.-% Monomere M2c.

Weiterhin hat es sich als vorteilhaft erwiesen, wenn das in den erfindungsgemäßen Zusammensetzungen enthaltene Polymerisat eine Glasübergangstemperatur T_{g} von wenigstens 10 °C, vorzugsweise wenigstens 20 °C insbesondere wenigstens 30 °C und speziell wenigstens 50°C aufweist. Insbesondere wird die Glasübergangstemperatur einen Wert von 180 °C, und besonders bevorzugt 130 °C nicht überschreiten. Sofern die erfindungsgemäße Wirkstoffzusammensetzung mehrere Polymerisate mit unterschiedlichen Glasübergangstemperaturen - sei es in Form von Stufen- bzw. Kern-Schale-Polymerisaten, einschließlich mehrphasigen Polymerisaten mit Brombeer-, Himbeer- oder Halbmond-Morphologie" oder in Form von Blends unterschiedlicher Polymerisate - umfasst, liegt der Anteil an Polymerisaten mit einer Glasübergangstemperatur von wenigstens 10 °C, vorzugsweise wenigstens 20 °C, insbesondere wenigstens 30 °C und speziell wenigstens 50°C bei wenigstens 40 Gew.-%.

Unter der Glasübergangstemperatur T_{g} wird hier die gemäß ASTM D 3418-82 durch Differentialthermoanalyse (DSC) ermittelte "midpoint temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765).

In diesem Zusammenhang erweist es sich als hilfreich, die Glasübergangstemperatur T_{g} des Copolymeren P abzuschätzen. Nach Fox (T.G. Fox, Bull. Am. Phys. Soc. (Ser. II) 1, 123 [1956] und Ullmanns Enzyklopädie der technischen Chemie, Weinheim (1980), S. 17-18) gilt für die Glasübergangstemperatur von schwach vernetzten Mischpolymerisaten bei großen Molmassen in guter Näherung 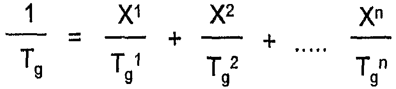 wobei X¹, X², ..., Xⁿ die Massenbrüche der Monomeren 1, 2, ..., n und T_{g}¹, T_{g}², ..., T_{g}ⁿ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed., J. Wiley, New York 1989 bekannt.

In den Polymerisatteilchen der erfindungsgemäßen Insektizid-Zusammensetzungen kann der wenigstens eine insektizide Wirkstoff im Wesentlichen gleichmäßig verteilt vorliegen. Die Polymerisatteilchen können jedoch auch Bereiche mit unterschiedlichen Wirkstoffkonzentrationen aufweisen. In diesem Fall können die Bereiche hoher Wirkstoffkonzentration und die Bereiche niedriger Wirkstoffkonzentration eine Kern-Schale-Anordnung aufweisen (Kern-Schale-Morphologie), in Form tröpfchen- bzw. kugelförmiger Bereiche, die sich teilweise durchdringen (Halbmond-Morphologie), oder die gegebenenfalls in eine Matrix eingebettet oder auf einer Polymermatrix angeordnet sind (Brombeer- bzw. Himbeer-Morphologie)

In einer bevorzugten Ausführungsform der Erfindung weisen die Polymerisatteilchen Bereiche mit einer hohen Wirkstoffkonzentration und Bereiche mit einer niedrigen Wirkstoffkonzentration auf, wobei erstere in den äußeren Bereichen und letztere in den inneren Bereichen der Polymerisatteilchen angeordnet sind. Beispielsweise bilden die Bereiche höherer Konzentration eine geschlossene oder durchbrochene Schale um einen Kern mit niedrigerer Wirkstoffkonzentration, oder die Bereiche höherer Konzentration bilden Tröpfchen oder Kugeln, deren Hauptmenge auf einem Kernbereich mit niedrigerer Konzentration angeordnet sind oder an der Oberfläche dieses Kernbereichs in diesen eingebettet sind.

Die Bereiche hoher Wirkstoffkonzentration enthalten vorzugsweise wenigstens 60 Gew.-%, insbesondere wenigstens 80 Gew.-% und bis zu 100 Gew.-% des in der Zusammensetzung enthaltenen Insektizid-Wirkstoffs, wohingegen die Bereiche geringer Wirkstoffkonzentration typischerweise nicht mehr als 40 Gew.-%, häufig nicht mehr als 20 Gew.-% oder keinen Wirkstoff enthalten. Das Gewichtsverhältnis von Bereichen hoher Wirkstoffkonzentration zu Bereichen geringer Wirkstoffkonzentration liegt typischerweise im Bereich von 1:10 bis 10:1, insbesondere im Bereich von 4:1 bis 1:4. Der Konzentrationsunterschied zwischen den Bereichen beträgt typischerweise wenigstens 0,1 g/100 g Polymerisat, insbesondere wenigstens 1 g/100 g Polymerisat, z.B. 0,1 bis 50 g/100 g Polymerisat, insbesondere 1 bis 20 g/100 g Polymerisat.

Die Polymerbestandteile in den Bereichen hoher bzw. niedriger Wirkstoffkonzentration können gleich oder verschieden sein und unterscheiden sich vorzugsweise zumindest in der Art der Monomere M1. Gemäß einer ersten bevorzugten Ausführungsform der Erfindung sind die Monomere M1, welche die Bereiche hoher Wirkstoffkonzentration bilden, unter C₁-C₄-Alkylmethacrylaten und Mischungen aus wenigstens 60 Gew.-%, insbesondere wenigstens 80 Gew.-% C₁-C₄-Alkylmethacrylaten mit bis zu 40 Gew.-%, insbesondere bis zu 20 Gew.-% davon verschiedenen Monomeren M1 ausgewählt, wohingegen die Monomere M1, welche die Bereiche geringer Wirkstoffkonzentration bilden, unter Vinylaromaten und Mischungen aus wenigstens 60 Gew.-%, insbesondere wenigstens 80 Gew.-% Vinylaromaten mit bis zu 40 Gew.-%, insbesondere bis zu 20 Gew.-% davon verschiedenen Monomeren M1 ausgewählt sind. Gemäß einer zweiten bevorzugten Ausführungsform der Erfindung sind die Monomere M1, welche die Bereiche niedriger Wirkstoffkonzentration bilden, unter C₁-C₄-Alkylmethacrylaten und Mischungen aus wenigstens 60 Gew.-%, insbesondere wenigstens 80 Gew.-% C₁-C₄-Alkylmethacrylaten mit bis zu 40 Gew.-%, insbesondere bis zu 20 Gew.-% davon verschiedenen Monomeren M1 ausgewählt, wohingegen die Monomere M1, welche die Bereiche hoher Wirkstoffkonzentration bilden, unter Vinylaromaten und Mischungen aus wenigstens 60 Gew.-%, insbesondere wenigstens 80 Gew.-% Vinylaromaten mit bis zu 40 Gew.-%, insbesondere bis zu 20 Gew.-% davon verschiedenen Monomeren M1 ausgewählt sind. Gemäß einer dritten bevorzugten Ausführungsform der Erfindung sind die Monomere M1, welche die Bereiche niedriger Wirkstoffkonzentration bilden, unter C₁-C₄-Alkylmethacrylaten und Mischungen aus wenigstens 90 Gew.-%, C₁-C₄-Alkylmethacrylaten mit bis zu 10 Gew.-% davon verschiedenen Monomeren M1 ausgewählt, wohingegen die Monomere M1, welche die Bereiche hoher Wirkstoffkonzentration bilden, unter Mischungen von 20 bis 85 Gew.-%, insbesondere 50 bis 80 Gew.-% C₁-C₄-Alkylmethacrylaten mit 15 bis 80 Gew.-%, insbesondere 20 bis 50 Gew.-% davon verschiedenen Monomeren M1, insbesondere Vinylaromaten ausgewählt sind. In diesen Ausführungsformen ist Methylmethacrylat ein bevorzugtes C₁-C₄-Alkylmethacrylat. In diesen Ausführungsformen ist Styrol ein bevorzugter Vinylaromat. Ferner hat es sich als vorteilhaft erwiesen, wenn die Monomere, welche die Bereiche hoher Wirkstoffkonzentration bilden, die Hauptmenge, insbesondere wenigstens 80 Gew.-% umfassen. Hierbei beziehen sich alle Angaben in Gew.-% jeweils auf die Monomere M1, welche die jeweiligen Bereiche bilden. Ferner hat es sich als vorteilhaft erwiesen, wenn die Monomere, welche die Bereiche hoher Wirkstoffkonzentration bilden, die Hauptmenge, insbesondere wenigstens 80 Gew.-% oder alle in der Polymerisation eingesetzten Monomere M-k umfassen. Dementsprechend liegt der Anteil der Monomere M-k, bezogen auf das Gewicht der Monomere, welche die Bereiche hoher Wirkstoffkonzentration bilden, vorzugsweise im Bereich von 0,5 bis 40 Gew.-%, insbesondere im Bereich von 1 bis 20 Gew.-%. Ferner hat es sich als vorteilhaft erwiesen, wenn die Monomere, welche die Bereiche niedriger Wirkstoffkonzentration bilden, wenigstens ein vernetzend wirkendes Monomer, z.B. ein Monomer M2c umfassen. Dementsprechend liegt der Anteil der Monomere M2c, bezogen auf das Gewicht der Monomere, welche die Bereiche niedriger Wirkstoffkonzentration bilden, vorzugsweise im Bereich von 0,01 bis 4 Gew.-%, insbesondere im Bereich von 0,05 bis 2 Gew.-%.

Die erfindungsgemäßen Zusammensetzungen enthalten einen oder mehrere insektizide Wirkstoffe mit einer geringen Wasserlöslichkeit von in der Regel nicht mehr als 5 g/l, vorzugsweise nicht mehr als 3 g/l und insbesondere nicht mehr als 1 g/l, z. B. 0,001 bis 1 g/l oder 0,002 bis 0,5 g/l bei 25 °C/1013 mbar. Hierbei handelt es sich typischerweise um organische Substanzen, insbesondere um Verbindungen mit definierter Zusammensetzung, d. h. einer definierten Summenformel, oder um Gemische von Verbindungen mit definierter Zusammensetzung. In der Regel handelt es sich um niedermolekulare Substanzen mit einem Molekulargewicht von nicht mehr als 500 Dalton. Typischerweise sind die insektiziden Wirkstoffe in den Monomeren M zumindest in der eingesetzten Menge bei Polymerisationstemperatur löslich. In der Regel ist eine Löslichkeit in den Monomeren M von 1g/l bei 25°C und 1013 mbar vorteilhaft. Beispiele für geeignete insektizide Wirkstoffe sind die im Compendium of Pesticide Common Names: http://www.hclrss.demon.co.uk/class-insecticides.html (Index of common names) als Insektizide aufgeführten Verbindungen. Hierzu zählen beispielsweise:
- Organo(thio)phosphate wie Acephate, Azamethiphos, Azinphos-methyl, Chlorpyrifos, Chlorpyriphos-methyl, Chlorfenvinphos, Diazinon, Dichlorvos, Dicrotophos, Dimethoate, Disulfoton, Ethion, Fenitrothion, Fenthion, Isoxathion, Malathion, Methamidophos, Methidathion, Methyl-Parathion, Mevinphos, Monocrotophos, Oxydemeton-methyl, Paraoxon, Parathion, Phenthoate, Phosalone, Phosmet, Phosphamidon, Phorate, Phoxim, Pirimiphos-methyl, Profenofos, Prothiofos, Sulprophos, Terbufos, Triazophos, Trichlorfon;
- Carbamate wie Alanycarb, Benfuracarb, Bendiocarb, Carbaryl, Carbosulfan, Fenoxycarb, Furathiocarb, Indoxacarb, Methiocarb, Methomyl, Oxamyl, Pirimicarb, Propoxur, Thiodicarb, Triazamate;
- Pyrethroide wie Allethrin, Bifenthrin, Cyfluthrin, Cyphenothrin, Cypermethrin sowie die alpha-, beta-, theta- und zeta-Isomere, Deltamethrin, Esfenvalerate, Ethofenprox, Fenpropathrin, Fenvalerate, Cyhalothrin, Lambda-Cyhalothrin, Imiprothrin, Permethrin, Prallethrin, Pyrethrin I, Pyrethrin II, Silafluofen, Tau-Fluvalinate, Tefluthrin, Tetramethrin, Tralomethrin, Transfluthrin, Zeta-Cypermethrin;
- Arthropode Wachstumsregulatoren wie a) Chitinsyntheseinhibitoren; z. B. Benzoylharnstoffe wie Chlorfluazuron, Cyromacin, Diflubenzuron, Flucycloxuron, Flufenoxuron, Hexaflumuron, Lufenuron, Novaluron, Teflubenzuron, Triflumuron; Buprofezin, Diofenolan, Hexythiazox, Etoxazole, Clofentazine; b) Ecdysone Antagonisten wie Halofenozide, Methoxyfenozide, Tebufenozide; c) Juvenoide wie Pyriproxyfen, Methoprene, Fenoxycarb; d) Lipidbiosynthese-Inhibitoren wie Spirodiclofen, Spiromesifen und Spirotetramat;
- Neonicothinoide wie Flonicamid, Clothianidin, Dinotefuran, Imidacloprid, Thiamethoxam, Nitenpyram, Nithiazin, Acetamiprid, Thiacloprid;
- Pyrazol-Insektizide (GABA-Antagonisten) wie Acetoprole, Ethiprole, Fipronil, Pyriprole, Pyrafluprole, Tebufenpyrad, Tolfenpyrad und Vaniliprole;
- weiterhin Abamectin, Acequinocyl, Amidrazone, Amidoflumat, Amitraz, Azadirachtin, Bifenazate, Cartap, Chlorfenapyr, Chlordimeform, Cyromazine, Diafenthiuron, Diofenolan, Emamectin, Endosulfan, Fenazaquin, Formetanate, Formetanate-Hydrochlorid, Hydramethylnon, Indoxacarb, Metaflumizon (= 4-{(2Z)-2-({[4-(trifluoro-methoxy)anilino] carbonyl} hydrazono)-2-[3-(trifluoromethyl)-phenyl]ethyl} benzo-nitrile), Pyridaben, Pymetrozine, Spinosad, Tebufenpyrad, Flupyrazaphos, Flonicamid, Flufenerim, Flubendiamide, Bistrifluron, NC512, Benclothiaz, Cyflumethofen, Milbermectin, Cyclometofen, Lepimectin, Profluthrin, Dimefluthrin, N-Ethyl-2,2-cichlor-1-methylcyclopropancarboxamid-2-(2,6-dichlor-α,α,α-trifluro-p-tolyl)hydrazon, N-Ethyl-2,2-dimethylpropionamid-2-(2,6-dichlor-4-trifluormethylphenyl)hydrazon, Thiocyclam, Pyridalyl sowie die in WO 98/05638 beschriebene Verbindung der Formel

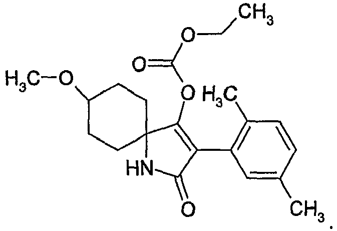

Hierunter sind solche Insektizide bevorzugt, die gegen holzzerstörende Insekten, insbesondere holzzerstörende Käfer, Termiten (Isoptera) und Ameisen (Formicidae) und insbesondere gegen die folgenden holzzerstörenden Insekten wirksam sind:
Ordnung Coleoptera (Käfer):
   - Cerambycidae wie Hylotrupes bajulus, Callidium violaceum;
   - Lyctidae wie Lyctus linearis, Lyctus brunneus;
   - Bostrichidae wie Dinoderus minutus;
   - Anobiidae wie Anobium punctatum, Xestobium rufovillosum;
   - Lymexylidae wie Lymexylon navale;
   - Platypodidae wie Platypus cylindrus;
   - Oedemeridae wie Nacerda melanura.

### Ordnung Hymenoptera (Hautflügler):

- Formicidae wie Camponotus abdominalis, Lasius flavus, Lasius brunneus, Lasius fuliginosus;

### Ordnung Isoptera (Termiten):

- Calotermitidae wie Calotermes flavicollis, Cryptothermes brevis;
- Hodotermitidae wie Zootermopsis angusticollis, Zootermopsis nevadensis;
- Rhinotermitidae wie Reticulitermes flavipes, Reticulitermes lucifugus, Coptotermes formosanus, Coptotermes acinaciformis;
- Mastotermitidae wie Mastotermes darwiniensis.

Hierzu zählen insbesondere die insektiziden Wirkstoffe aus der Klasse der Pyrethroide, Carbamate, Organo(thio)phosphate, arthropode Wachstumsregulatoren, wie Chitinbiosyntheseinhibitoren, ecdysone Antagonisten, Juvenoide, Lipidbiosynthese-Inhibitoren, Neonicotinoide, Pyrazol-Insektizide sowie Chlorfenapyr.

Bevorzugt sind insbesondere solche insektiziden Wirkstoffe, die in der Biozidverordnung der Europäischen Union (VERORDNUNG (EG) Nr. 2032/2003 DER KOMMISSION vom 4. November 2003) in den Klassen 08 (Holzschutzmittel) und 18 (Insektizide, Akarizide und Substanzen zur Kontrolle anderer Arthropoden) genannt sind.

Der insektizide Wirkstoff ist üblicherweise in einer Menge von 0,1 bis 50 Gew.-%, vorzugsweise in einer Menge von 0,2 bis 30 Gew.-% und insbesondere in einer Menge von 0,5 bis 20 Gew.-%, bezogen auf die das Polymerisat bildenden Monomere M in der erfindungsgemäßen Wirkstoffzusammensetzung enthalten.

Grundsätzlich können die in den erfindungsgemäßen Zusammensetzungen enthaltenen Polymerisatteilchen neben dem wenigstens einen insektiziden Wirkstoff auch weitere Wirkstoffe enthalten. Insbesondere enthalten die Polymerisatteilchen den insektiziden Wirkstoff als alleinigen Wirkstoff. In einer Ausführungsform der Erfindung ist der Anteil fungizider Wirkstoffe < 1 Gew.-%, bezogen auf den in den Polymerisatteilchen enthaltenen insektiziden Wirkstoff, bzw. < 0,1 Gew.-%, bezogen auf die Gesamtmenge an Polymerisat und Wirkstoff.

Vorzugsweise beträgt die Gesamtmenge an Wirkstoff im Polymerisat der erfindungsgemäßen Zusammensetzungen 0,2 bis 50 Gew.-%, insbesondere 0,5 bis 30 Gew.-% und besonders bevorzugt 1 bis 20 Gew.-%, bezogen auf das Polymerisat bzw. auf die das Polymerisat bildenden Monomere M.

Die erfindungsgemäßen wässrigen Zusammensetzungen enthalten üblicherweise zur Stabilisierung der Polymerisatteilchen in dem wässrigen Medium oberflächenaktive Substanzen. Hierzu zählen sowohl Schutzkolloide als auch niedermolekulare Emulgatoren, wobei letztere im Unterschied zu den Schutzkolloiden in der Regel ein Molekulargewicht unterhalb 2000 g/mol, insbesondere unterhalb 1000 g/mol (Massenmittel) aufweisen. Die Schutzkolloide und Emulgatoren können sowohl kationischer, anionischer, neutraler als auch zwitterionischer Natur sein.

Bei den kationischen oberflächenaktiven Substanzen kann es sich sowohl um kationische Emulgatoren handeln als auch um kationische Schutzkolloide, die sich von den Emulatoren in erster Linie durch ein höheres Molekulargewicht unterscheiden, das in der Regel wenigstens 1000 Dalton beträgt und insbesondere im Bereich von 1000 bis 50000 Dalton liegt (Zahlenmittel).

Bei den kationischen Emulgatoren handelt es sich typischerweise um Verbindungen, die wenigstens einen langkettigen Kohlenwasserstoffrest mit typischerweise 6 bis 30 C-Atomen, insbesondere 8 bis 22 C-Atomen und wenigstens ein protoniertes oder insbesondere quaternisiertes Stickstoffatom, z. B. in Form einer Ammonium-, Pyrdinium- oder Imidazolinium-Gruppe aufweisen. Daneben können die kationischen Emulgatoren auch Oligoethergruppen, insbesondere Oligoethylenoxid-Gruppen aufweisen (Ethoxilierungsgrad typischerweise 2 bis 40).

Beispiele für kationische Emulgatoren, umfassen quartäre Ammoniumsalze, z. B. Trimethyl- und Triethyl-C₆-C₃₀-alkylammoniumsalze wie Cocotrimethylammoniumsalze, Trimethylcetylammoniumsalze, Dimethyl- und Diethyl-di-C₄-C₂₀-alkylammoniumsalze wie Didecyldimethylammoniumsalze und Dicocodimethylammoniumsalze, Methyl- und Ethyl-tri-C₄-C₂₀-alkylammoniumsalze wie Methyltrioctylammoniumsalze, C₁-C₂₀-Alkyl-di-C₁-C₄-alkylbenzylammoniumsalze wie Triethylbenzylammoniumsalze und Cocobenzyldimethylammoniumsalze, ethoxilierte und quaternisierte C₆-C₃₀-Alkylamine (Thoxilierungsgrad typischerweise 2 bis 49), z. B. Quaternisierungsprodukte von ethoxiliertem Oleylamin mit einem Ethoxilierungsgrad von 2 bis 20 insbesondere 4 bis 8, Methyl- und Ethyl-di-C₄-C₂₀-alkylpoly(oxyethyl)ammoniumsalze, z. B. Didecylmethylpoly(oxyethyl)ammoniumsalze, N-C₆-C₂₀-Alkylpyridiniumsalze, z. B. N-Laurylpyridiniumsalze, N-Methyl- und N-Ethyl-N-C₆-C₂₀-alkylmorpholiniumsalze, sowie N-Methyl- und N-Ethyl-N'-C₆-C₂₀-alkylimidazoliniumsalze, insbesondere die Halogenide, Borate, Carbonate, Formiate, Acetate, Propionate, Hydrogencarbonate, Sulfate und Methosulfate.

Bei den kationischen Schutzkolloiden handelt es sich typischerweise um Homo- und Copolymere ethylenisch ungesättigter Monomere, die wenigstens eines der oben genannten Monomere M-k in einer Menge von wenigstens 20 Gew.-%, insbesondere wenigstens 30 Gew.-%, bezogen auf das Gesamtgewicht der das kationische Schutzkollid konstituierenden Monomere einpolymerisiert enthalten. Daneben können die Schutzkolloide neutrale Comonomere einpolymerisert enthalten. In den als Schutzkolloide geeigneten Copolymeren beträgt die Menge an neutralen Comonomeren typischerweise 5 bis 80 Gew.-%, insbesondere 10 bis 70 Gew.-%, bezogen auf die Gesamtmenge der das kationische Schutzkolloid konstituierenden Monomere. Geeignete Comonomere sind insbesondere neutrale mit Wasser mischbare monoethylenisch ungesättigte Monomere. Hierzu zählen N-Vinyllactame, z.B. N-Vinylpyrrolidon, N-Vinylcaprolactam, N-Vinylamide aliphatischer C₁-C₁₀-Carbonsäuren, wie N-Vinylformamid, N-Vinylacetamid, N-Vinylpropionamid, N-Vinyl-M-methylacteamid und dergleichen, Amide monoethylenisch ungesättigter Monocarbonsäuren mit in der Regel 3 bis 5 C-Atomen wie Acrylamid, Methacrylamid, Hydroxyalkylester monoethylenisch ungesättigter Monocarbonsäuren mit in der Regel 3 bis 5 C-Atomen, z.B. Ester der Acrylsäure oder der Methacrylsäure wie Hydroxyethylacrylat, Hydroxyethylmethacrylat, Hydroxypropylacrylat, Hydroxypropylmethacrylat, Hydroxybutylacrylat und Hydroxybutylmethacrylat, weiterhin Ester monoethylenisch ungesättigter Monocarbonsäuren mit in der Regel 3 bis 5 C-Atomen, z.B. Ester der Acrylsäure oder der Methacrylsäure mit Oligoethylenoxiden oder Monoalkyloligoethylenoxiden. Neben den mit Wasser mischbaren neutralen Monomeren kommen als Comonomere auch mit Wasser nicht mischbare monoethylenisch ungesättigte Comonomere in Betracht. Hierzu zählen insbesondere vinylaromatische Monomere wie Styrol, α-Methylstyrol, tert.-Butylstyrol und Vinyltoluol, Ester α,β-monoethylenisch ungesättigter Mono- und Dicarbonsäuren mit 3 bis 8 und insbesondere 3 oder 4 C-Atomen mit C₁-C₁₀-Alkanolen oder mit C₅-C₈-Cycloalkanolen, insbesondere die Ester der Acrylsäure, der Methacrylsäure, der Crotonsäure, die Diester der Maleinsäure, der Fumarsäure und der Itaconsäure und besonders bevorzugt die Ester der Acrylsäure mit C₂-C₁₀-Alkanolen (= C₂-C₁₀-Alkylacrylate) wie Ethylacrylat, n-Butylacrylat, Isobutylacrylat, tert.-Butylacrylat, n-Hexylacrylat, 2-Ethylhexylacrylat und 3-Propylheptylacrylat und die Ester der Methacrylsäure mit C₂-C₁₀-Alkanolen wie Ethylmethacrylat, n-Butylmethacrylat, Isobutylmethacrylat, tert.-Butylmethacrylat, n-Hexylmethacrylat und dergleichen; Vinyl- und Allylester aliphatischer Carbonsäuren mit 3 bis 10 C-Atomen, beispielsweise Vinylpropionat sowie die Vinylester der Versatic®-Säuren (Vinylversatate), konjugierte Diolefine wie Butadien und Isopren sowie C₂-C₁₂-Olefine wie Ethylen, Propen, 1-Buten, n-Hexen und Diisobuten.

### Bevorzugte Schutzkolloide sind

- Homopolymere von N-Vinyl-N-methylimidazoliniumsalzen oder von N-Alkylvinylpyridiniumsalzen oder von Monomeren der Formel Copolymere dieser Monomere,
- Copoylmere von N-Vinyl-N-methylimidazoliniumsalzen, von N-Alkylvinylpyridiniumsalzen oder von Monomeren der Formel I mit den vorgenannten mit Wasser mischbaren Comonomeren, wobei der Anteil der mit Wasser mischbaren Comonomere typischerweise 5 bis 80 Gew.-%, insbesondere 10 bis 70 Gew.-%, bezogen auf die Gesamtmenge der das kationische Schutzkolloid konstituierenden Monomere beträgt, sowie
- Copolymere, die aus 30 bis 95 Gew.-%, insbesondere 50 bis 90 Gew.-%, wenigstens einem unter N-Vinyl-N-methylimidazoliniumsalzen, N-Alkylvinylpyridiniumsalzen und Monomeren der Formel I ausgewähltem Monomer M-k und wenigstens einem Comonomer, das mit Wasser nicht mischbar ist, aufgebaut sind, wobei der Anteil derartiger Comonomere typischerweise 5 bis 70 Gew.-%, insbesondere 10 bis 50 Gew.-%, bezogen auf die Gesamtmenge der das kationische Schutzkolloid konstituierenden Monomere beträgt,
- Terpolymere, die aus 20 bis 90 Gew.-%, insbesondere 30 bis 90 Gew.-%, wenigstens einem unter N-Vinyl-N-methylimidazoliniumsalzen, N-Alkylvinylpyridiniumsalzen und Monomeren der Formel I ausgewähltem Monomer M-k, 5 bis 60 %, insbesondere 5 bis 40 Gew.-%, wenigstens einem Comonomer, das mit Wasser nicht mischbar ist, und 5 bis 75 Gew.-%, insbesondere 5 bis 65 Gew.-% wenigstens einem Comonomer aufgebaut sind, das mit Wasser mischbar ist.

Derartige Schutzkolloide sind bekannt und im Handel erhältlich, z.B. unter den Handelsbezeichnungen Luviquat und Sokalan (BASF Aktiengesellschaft).

Als kationische Schutzkolloide kommen außerdem Polyethylenimine und deren Quaternisierungsprodukte sowie Polyvinylamine, die durch Hydrolyse von Homo- und Copolymeren des N-Vinylformamids erhältlich sind, und deren Quaternisierungsprodukte in Betracht. Derartige Schutzkolloide sind ebenfalls bekannt und im Handel erhältlich, z.B. unter den Handelsbezeichnungen Lupasol, Hydragen und Sokalan (BASF Aktiengesellschaft).

Beispiele für anionische oberflächenaktive Substanzen sind anionische Emulgatoren wie Alkylphenylsulfonate, Phenylsulfonate, Alkylsulfate, Alkylsulfonate, Alkylethersulfate, Alkylphenolethersulfate, Alkylpolyglykoletherphosphate, Alkyldiphenylethersulfonate, Polyarylphenyletherphosphate, Alkylsulfosuccinate, Olefinsulfonate, Paraffinsulfonate, Petroleumsulfonate, Tauride, Sarkoside, Fettsäuren, Alkylnaphthalinsulfonsäuren, Naphthalinsulfonsäuren, einschließlich ihrer Alkali-, Erdalkali-, Ammonium- und Amin-Salze.

Beispiele für anionische Schutzkolloide sind Ligninsulfonsäuren, Kondensationsprodukte sulfonierter Naphthaline mit Formaldehyd oder mit Formaldehyd und Phenol und gegebenenfalls Harnstoff sowie Kondensationsprodukte aus Phenolsulfonsäure, Formaldehyd und Harnstoff, Lignin-Sulfit-Ablauge und Ligninsulfonate sowie Polycarboxylate wie Polyacrylate, Maleinsäureanhydrid/Olefin-Copolymere (z. B. Sokalan^{®} CP9, BASF) sowie die Alkali-, Erdalkali-, Ammonium- und Amin-Salze der vorgenannten Schutzkolloide.

Nichtionische Emulgatoren sind beispielsweise Alkylphenolalkoxylate, Alkoholalkoxylate, Fettaminalkoxylate, Polyoxyeethylenglycerolfettsäureester, Rizinusölalkoxylate, Fettsäurealkoxylate, Fettsäureamidalkoxylate, Fettsäurepolydiethanolamide, Lanolinethoxylate, Fettsäurepolyglykolester, Isotridecylalkohol, Fettsäureamide, Methylcellulose, Fettsäureester, Silicon-Öle, Alkylpolyglykoside und Glycerolfettsäureester.

Beispiele für nichtionische Schutzkolloide sind Polyethylenglykol, Polypropylenglykol, Polyethylenglykolpolypropylenglykol-Blockcopolymere, Polyethylenglykolalkylether, Polypropylenglykolalkylether, Polyethylenglykolpolypropylen-glykolether-Blockcopolymere und deren Gemische.

In einer bevorzugten Ausführungsform der Erfindung enthält die erfindungsgemäße Zusammensetzung wenigstens eine kationische oberflächenaktive Substanz, insbesondere einen kationischen Emulgator.

In einer anderen bevorzugten Ausführungsform der Erfindung enthält die erfindungsgemäße Zusammensetzung wenigstens eine kationische oberflächenaktive Substanz, insbesondere einen kationischen Emulgator und wenigstens eine nichtionische oberflächenaktive Substanz.

Die Gesamtmenge an oberflächenaktiver Substanz liegt üblicherweise im Bereich von 0,2 bis 30 Gew.-%, insbesondere im Bereich von 0,3 bis 20 Gew.-%, und besonders bevorzugt 0,5 bis 10 Gew.-%, bezogen auf die Monomere M. Die kationischen oberflächenaktiven Substanzen O-K werden, sofern erwünscht, typischerweise in Mengen von 0,2 bis 12 Gew.-%, insbesondere in Mengen von 0,5 bis 8 Gew.-%, bezogen auf die Gesamtmenge der zu polymerisierenden Monomere M eingesetzt. Im Falle kationischer Emulgatoren beträgt die Menge typischerweise 0,5 bis 12 Gew.-%, im Falle kationischer Schutzkolloide 0,1 bis 6 Gew.-%, jeweils bezogen auf die Gesamtmenge der Monomere M. Die Menge an nichtionischer oberflächenaktiver Substanz liegt, sofern erwünscht, vorzugsweise im Bereich von 0,2 bis 12 Gew.-%, insbesondere 0,5 bis 10 Gew.-%, bezogen auf die Gesamtmenge der das Polymerisat konstituierenden Monomere M.

Die Herstellung der erfindungsgemäßen wässrigen Zusammensetzungen umfasst eine radikalische, wässrige Emulsionspolymerisation einer Monomerzusammensetzung ethylenisch ungesättigter Monomere M, worin die ethylenisch ungesättigten Monomere M den wenigstens einen insektiziden Wirkstoff in gelöster Form enthalten. Bei der radikalischen wässrigen Emulsionspolymerisation werden die Monomere in Form einer Öl-in-Wasser-Emulsion der Monomere M polymerisiert, worin die Monomertröpfchen der Emulsion den wenigstens einen insektiziden Wirkstoff enthalten. Die Polymerisation erfolgt dabei in Analogie zu einer konventionellen Emulsionspolymerisation mit dem Unterschied, dass die zu polymerisierende Monomeremulsion den insektiziden Wirkstoff in den Monomertröpfchen gelöst enthält.

Die Öl-in-Wasser-Emulsion der Wirkstoff-Monomer-Lösung kann in-situ durch Zugabe einer Lösung des Wirkstoffs in den zu polymerisierenden Monomeren M in das unter Polymerisationsbedingungen befindliche Polymerisationsgefäß erzeugt werden. Vorzugsweise wird man jedoch den Wirkstoff in den Monomeren M lösen und die so erhaltene Monomerlösung in eine wässrige Monomeremulsion überführen, bevor man die so erhaltene Monomer/Wirkstoff-Emulsion der Polymerisationsreaktion zuführt.

Als oberflächenaktive Substanzen kommen die üblicherweise für die Emulsionspolymerisation eingesetzten Emulgatoren und Schutzkolloide in Betracht, die oben als Bestandteile der erfindungsgemäßen Wirkstoffformulierungen bereits genannt wurden. Die für eine Emulsionspolymerisation üblicherweise eingesetzten Mengen an oberflächenaktiven Substanzen liegen üblicherweise in den oben angegebenen Bereichen, so dass die Gesamtmenge oder ein Teil der in den erfindungsgemäßen Zusammensetzungen enthaltenen oberflächenaktiven Substanzen über die Emulsionspolymerisation zugeführt wird. Es ist jedoch auch möglich nur einen Teil, z. B. 10 bis 90 Gew.-%, insbesondere 20 bis 80 Gew.-% der in der erfindungsgemäßen Zusammensetzung enthaltenen oberflächenaktiven Substanzen in der Emulsionspolymerisation einzusetzen und die Restmenge an oberflächenaktiver Substanz im Anschluss an die Emulsionspolymerisation, vor oder nach einer gegebenenfalls durchzuführenden Desodorierung der Emulsionspolymerisation zuzugeben (Nachseifen).

Zur Gewährleistung einer kationischen Oberflächenladung hat es sich bewährt, die Emulsionspolymerisation der Monomere M in Gegenwart einer kationischen oberflächenaktiven Substanz durchzuführen. Demnach erfolgt in einer bevorzugten Ausführungsform der Erfindung die Herstellung der erfindungsgemäßen Wirkstoffzusammensetzung durch radikalische wässrige Emulsionspolymerisation der Monomerzusammensetzung in Gegenwart einer kationischen oberflächenaktiven Substanz, insbesondere in Gegenwart eines kationischen Emulgators. Der Einsatz der kationischen oberflächenaktiven Substanz in der Emulsionspolymerisation erfolgt insbesondere dann, wenn die Monomere M kein Monomer M-k umfassen. Es hat sich jedoch auch bewährt, die Emulsionspolymerisation auch dann in Gegenwart einer kationischen oberflächenaktiven Substanz O-k durchzuführen, wenn die Monomere M ein Monomer M-k umfassen.

Die kationischen oberflächenaktiven Substanzen O-k werden, sofern erwünscht, typischerweise in Mengen von 0,2 bis 12 Gew.-%, insbesondere in Mengen von 0,5 bis 8 Gew.-%, bezogen auf die Gesamtmenge der zu polymerisierenden Monomere M eingesetzt. Im Falle kationischer Emulgatoren beträgt die Menge typischerweise 0,5 bis 12 Gew.-%, im Falle kationischer Schutzkolloide 0,1 bis 6 Gew.-%, jeweils bezogen auf die Gesamtmenge der Monomere M.

Gegebenenfalls kann es von Vorteil sein, die Emulsionspolymerisation in Gegenwart wenigstens einer nichtionischen oberflächenaktiven Substanz durchzuführen, insbesondere in Kombination mit einer kationischen oberflächenaktiven Substanz. Als nichtionische oberflächenaktive Substanzen kommen die zuvor genannten nichtionischen oberflächenaktiven Verbindungen in Betracht.

Die Menge an nichtionischer oberflächenaktiver Substanz, die in der Emulsionspolymerisation eingesetzt wird, liegt typischerweise im Bereich von 0,1 bis 20 Gew.-%, insbesondere im Bereich von 0,2 bis 17 Gew.-%, bezogen auf die Gesamtmenge der zu polymerisierenden Monomere M.

Die Gesamtmenge an oberflächenaktiver Substanz, die in der Emulsionspolymerisation eingesetzt wird, liegt typischerweise im Bereich von 0,2 bis 30 Gew.-%, insbesondere im Bereich von 0,5 bis 20 Gew.-%, bezogen auf die Gesamtmenge der zu polymerisierenden Monomere M.

In der Regel erfolgt die Polymerisation nach einem sogenannten Monomerzulaufverfahren, d.h. die Hauptmenge, vorzugsweise wenigstens 70 % und insbesondere wenigstens 90 % der Lösung des Wirkstoffs in den Monomeren M, bzw. die Hauptmenge, vorzugsweise wenigstens 70 % und insbesondere wenigstens 90 % der Monomer/Wirkstoff-Emulsion wird im Verlauf der Polymerisationsreaktion dem Polymerisationsgefäß zugeführt. Vorzugsweise erfolgt die Zugabe der Monomer/Wirkstoff-Lösung bzw. Emulsion über einen Zeitraum von wenigstens 0,5 h, vorzugsweise wenigstens 1 h, z.B. 1 bis 10 h und insbesondere 2 bis 5 h. Die Zugabe der Monomer/WirkstoffLösung bzw. Emulsion kann mit konstanter oder veränderlicher Zugaberate, z. B. in Intervallen mit konstanter Zugaberate oder mit veränderlicher Zugaberate oder kontinuierlich mit veränderlicher Zugaberate erfolgen. Die Zusammensetzung der Monomer/Wirkstoff-Lösung bzw. Emulsion kann während der Zugabe konstant bleiben oder geändert werden, wobei Änderungen sowohl bezüglich der Monomerzusammensetzung als auch bezüglich der Art des Wirkstoffs oder der Konzentration des Wirkstoffs vorgenommen werden können.

In einer bevorzugten Ausführungsform der Erfindung ändert man im Verlauf der Monomerzugabe die Monomerzusammensetzung dergestalt, dass man in den Polymerteilchen Polymerbereiche mit unterschiedlicher Glasübergangstemperatur erhält. Dies erreicht durch eine sogenannten Stufenpolymerisation. Hierzu polymerisiert man zunächst in einer ersten Stufe eine erste Monomer/Wirkstoff-Lösung oder -Emulsion, deren Monomerzusammensetzung einer Glasübergangstemperatur T_{G}¹ entspricht, und gibt hierzu anschließend eine zweite Monomer/Wirkstoff-Lösung oder-Emulsion, deren Monomerzusammensetzung einer Glasübergangstemperatur T_{G}² entspricht (2. Stufe) und gegebenenfalls im Anschluss daran sukzessive eine oder mehrere weitere Monomer/Wirkstoff-Lösungen oder -Emulsionen, deren Monomerzusammensetzung jeweils einer Glasübergangstemperatur T_{G}ⁿ entspricht, wobei n für die jeweilige Stufe steht. Vorzugsweise unterscheiden sich die jeweiligen Glasübergangstemperaturen in aufeinander folgenden Polymerisationsstufen erhaltenen Polymere um wenigstens 10 K, insbesondere um wenigstens 20 K und besonders bevorzugt um wenigstens 30 K, z. B. 30 K bis 200 K, insbesondere 40 K bis 160 K. In der Regel wird die in einer Monomermenge polymerisierte Monomermenge wenigstens 5 Gew.-%, vorzugsweise wenigstens 10 Gew.-%, z. B. 5 bis 95 Gew.-%, insbesondere 10 bis 90 Gew.-% bei einer 2-stufigen Polymerisation und 5 bis 90 bzw. 5 bis 85 Gew.-%, insbesondere 10 bis 80 Gew.-% bei einer drei- oder mehrstufigen Polymerisation ausmachen.

Die Herstellung der erfindungsgemäßen wässrigen Wirkstoffzusammensetzungen, in denen die Polymerteilchen Bereiche mit hoher Wirkstoffkonzentration und Bereiche mit geringer Wirkstoffkonzentration aufweisen, kann in Analogie zur Herstellung bekannter mehrphasiger Emulsionspolymerisate durch ein mehrstufiges Emulsionspolymerisationsverfahren erfolgen, mit dem Unterschied, dass die Monomere, welche die wirkstoffreichen Bereiche bilden (Monomere Mₐ) eine höhere Wirkstoffkonzentration aufweisen, als die Monomere, welche die Bereiche mit geringerer Wirkstoffkonzentration bilden (Monomere M_{b}). Typischerweise enthalten die Monomere Mₐ wenigstens 70 Gew.-% und vorzugsweise wenigstens 80 Gew.-% oder die Gesamtmenge des in der Zusammensetzung enthaltenen insektiziden Wirkstoffs in gelöster Form. Dementsprechend enthalten die Monomere M_{b} die Restmenge an insektizidem Wirkstoff, d.h. nicht mehr als 30 Gew.-% insbesondere nicht mehr als 20 Gew.-% oder keinen insektiziden Wirkstoff.

Mehrphasige Emulsionspolymerisate und Verfahren zu ihrer Herstellung sind grundsätzlich aus dem Stand der Technik bekannt, beispielsweise aus "Emulsions Polymerization and Emulsion Polymers" (M.S. EI-Asser et al. Herausgeber), Wiley, Chichester 1997, Kapitel 9, S. 293-326 und dort zitierte Literatur; Y.C. Chen et al, J. Appl. Polym. Sci. 41 (1991), S. 1049; I. Cho et al. J. Appl. Polym. Sci. 30 (1985), S. 1903; D.R. Stuterman et al, Ind, Eng. Prod. Res. Dev. 23 (1985), S. 404; S. Lee et al., Polym. Chem 30 (1992), S. 2211; Y. C. Chen et al., Macromolecules 24 (1991) 3779, C.L. Winzor et al., Polymer 18 (1992) S. 3797. Ihre Herstellung erfolgt in der Regel durch sequentielle Emulsionspolymerisation wenigstens einer ersten Monomeremulsion, die eine erste Monomerphase bildet, und wenigstens einer zweiten Monomeremulsion, die wenigstens eine weitere Polymerphase bildet, wobei man durch die Reihenfolge, in der die Monomeremulsionen polymerisiert werden, aber auch durch die Monomerzusammensetzung und die Polymerisationsbedingungen, die Morphologie der Polymerteilchen und damit auch die relative Anordnung der Polymerphasen in den Polymerteilchen steuern kann.

Die Abfolge der Polymerisation der Monomere Mₐ und M_{b} ist von untergeordneter Bedeutung, da die Phasentrennung in einer äußere und eine innere Phase häufig in an sich bekannter Weise von der relativen Monomerzusammensetzung und nicht von der Reihenfolge der Polymerisation abhängt. Häufig wird man jedoch zunächst die Monomere M_{b} und dann die Monomere Mₐ polymerisieren, um Polymerisatteilchen mit äußeren Bereichen hoher Wirkstoffkonzentration und inneren Bereichen geringer Wirkstoffkonzentration zu erhalten.

In der Regel erfolgt die Polymerisation der Monomere Mₐ und M_{b} nach einem sogenannten Monomerzulaufverfahren, d. h. die Hauptmenge, vorzugsweise wenigstens 70 % und insbesondere wenigstens 90 % der Lösung des Wirkstoffs in den Monomeren Mₐ, bzw. die Hauptmenge, vorzugsweise wenigstens 70 % und insbesondere wenigstens 90 % der Monomer/Wirkstoff-Emulsion wird im Verlauf der Polymerisationsreaktion dem Polymerisationsgefäß zugeführt. Vorzugsweise erfolgt die Zugabe der Monomer/Wirkstoff-Lösung bzw. Emulsion über einen Zeitraum von wenigstens 0,5 h, vorzugsweise wenigstens 1 h, z.B. 1 bis 10 h und insbesondere 2 bis 5 h. Die Zugabe der Monomer/Wirkstoff-Lösung bzw. Emulsion kann mit konstanter oder veränderlicher Zugaberate, z. B. in Intervallen mit konstanter Zugaberate oder mit veränderlicher Zugaberate oder kontinuierlich mit veränderlicher Zugaberate erfolgen. Die Zusammensetzung der Monomer/Wirkstoff-Lösung bzw. Emulsion kann während der Zugabe konstant bleiben oder geändert werden, wobei Änderungen sowohl bezüglich der Monomerzusammensetzung als auch bezüglich der Art des Wirkstoffs oder der Konzentration des Wirkstoffs vorgenommen werden können.

Für die Herstellung der erfindungsgemäßen Wirkstoffzusammensetzung und für die Eigenschaften der Wirkstoffzusammensetzung hat es sich als vorteilhaft erwiesen, wenn man die Emulsionspolymerisation in Gegenwart eines Saatpolymers (Saatlatex) durchführt. Hierbei handelt es sich um einen feinteiligen Polymerlatex, dessen mittlere Teilchengröße üblicherweise nicht mehr als 100 nm, insbesondere nicht mehr als 80 nm und besonders bevorzugt nicht mehr als 50 nm beträgt. Die den Saatlatex konstituierenden Monomere sind vorzugsweise zu wenigstens 90 Gew.-%, insbesondere wenigstens 95 Gew.-% und häufig zu mehr als 99 Gew.-% unter den Monomeren M1 ausgewählt, wobei der Saatlatex zur Stabilisierung auch geringe Mengen, z. B. 0,1 bis 10 Gew.-%, insbesondere 0,1 bis 5 Gew.-% und speziell 0,1 bis 1 Gew.-% davon verschiedene Monomere M2, z. B. Monomere M2a enthalten kann. Häufig weist der Saatlatex eine Glasübergangstemperatur von wenigstens 10, insbesondere wenigstens 50 und häufig von wenigstens 80°C auf. Die Menge an Saatlatex beträgt üblicherweise 0,01 bis 5 Gew.-%, insbesondere 0,1 bis 4 Gew.-%, bezogen auf die Menge der zu polymerisierenden Monomere M1. Vorzugsweise befindet sich die Hauptmenge, und insbesondere die Gesamtmenge des Saatlatex zu Beginn der Polymerisation vollständig im Reaktionsgefäß. Der Saatlatex kann auch in-situ im Polymerisationsgefäß durch radikalische Emulsionspolymerisation der den Saatlatex bildenden Monomere generiert werden, wobei die den Saatlatex bildenden Monomere aus den vorgenannten Monomeren M1 und M2 und insbesondere zu wenigstens 90 Gew.-% aus den Monomeren M1 ausgewählt sind. Die gewünschte Teilchengröße des Saatlatex kann in an sich bekannter Weise über das Verhältnis von Monomer zu Emulgator gesteuert werden.

Die für die erfindungsgemäße Emulsionspolymerisation geeigneten Starter sind die für eine Emulsionspolymerisation geeigneten und üblicherweise verwendeten Polymerisationsinitiatoren, die eine radikalische Polymerisation der Monomere M auslösen. Hierzu zählen Azoverbindungen wie 2,2'-Azobis-isobutyronitril, 2,2'-Azobis(2-methyl-butyronitril), 2,2'-Azobis[2-methyl-N-(-2-hydroxyethyl)propionamid, 1,1'-Azobis(1-cyclo-hexancarbonitril), 2,2'-Azobis(2,4-dimethylvaleronitril), 2,2'-Azobis(N,N'-dimethyleniso-butyroamidin)dihydrochlorid, und 2,2'-Azobis(2-amidinopropan)dihydrochlorid, organische oder anorganische Peroxide wie Diacetylperoxid, Di-tert.-butylperoxid, Diamylpe-roxid, Dioctanoylperoxid, Didecanoylperoxid, Dilauroylperoxid, Dibenzoylperoxid, Bis(o-toluyl)peroxid, Succinylperoxid, tert.-Butylperacetat, tert.-Butylpermaleinat, tert.-Butylperisobutyrat, tert.-Butylperpivalat, tert.-Butylperoctoat, tert.-Butylperneodecanoat, tert.-Butylperbenzoat, tert.-Butylperoxid, tert.-Butylhydroperoxid, Cumolhydroperoxid, tert.-Butylperoxi-2-ethylhexanoat und Diisopropylperoxidicarbamat, Salze der Peroxodischwefelsäure und Redox-Initiatorsysteme.

Vorzugsweise setzt man wasserlösliche Initiatoren ein, z. B. kationische Azoverbindungen wie Azobis(dimethylamidinopropan), Salze der Peroxodischwefelsäure, insbesondere Natrium-, Kalium- oder Ammoniumsalze oder ein Redoxinitiatorsystem, das als Oxidationsmittel ein Salz der Peroxodischwefelsäure, Wasserstoffperoxid oder ein organisches Peroxid wie tert.-Butylhydroperoxid umfasst. Als Reduktionsmittel enthalten sie vorzugsweise eine Schwefelverbindung, die insbesondere ausgewählt ist unter Natriumhydrogensulfit, Natriumhydroxymethansulfinat und dem Hydrogensulfit-Addukt an Aceton. Weitere geeignete Reduktionsmittel sind phosphorhaltige Verbindungen wie phosphorige Säure, Hypophosphite und Phosphinate, sowie Hydrazin bzw. Hydrazinhydrat und Ascorbinsäure. Weiterhin können Redoxinitiatorsysteme einen Zusatz geringer Mengen von Redoxmetallsalzen wie Eisensalze, Vanadiumsalze, Kupfersalze, Chromsalze oder Mangansalze enthalten wie beispielsweise das Redoxinitiatorsystem Ascorbinsäure/Eisen(II)sulfat/Natriumperoxodisulfat.

Üblicherweise setzt man den Initiator in einer Menge von 0,02 bis 2 Gew.-% und insbesondere 0,05 bis 1,5 Gew.-%, bezogen auf die Menge der Monomere M ein. Die optimale Menge an Initiator hängt naturgemäß von dem eingesetzten Initiatorsystem ab und kann vom Fachmann in Routineexperimenten ermittelt werden. Der Initiator kann teilweise oder vollständig im Reaktionsgefäß vorgelegt werden. Vorzugsweise gibt man die Hauptmenge des Initiators, insbesondere wenigstens 80 %, z. B. 80 bis 99,5 % des Initiators im Verlauf der Polymerisation in den Polymerisationsreaktor.

Druck und Temperatur sind für die Herstellung der erfindungsgemäßen Wirkstoffzusammensetzungen von untergeordneter Bedeutung. Die Temperatur hängt naturgemäß vom eingesetzten Initiatorsystem ab und eine optimale Polymerisationstemperatur kann vom Fachmann durch Routineexperimente ermittelt werden. Üblicherweise liegt die Polymerisationstemperatur im Bereich von 20 bis 110 °C, häufig im Bereich von 50 bis 95 °C. Der Polymerisation wird üblicherweise bei Normaldruck bzw. Umgebungsdruck durchgeführt. Sie kann aber auch bei erhöhtem Druck, z. B. bis 3 bar oder bei geringfügig erniedrigtem Druck z. B. > 800 mbar durchgeführt werden.

Selbstverständlich kann das Molekulargewicht der Polymere durch Zugabe von Reglern in einer geringen Menge, z. B. 0,01 bis 2 Gew.-%, bezogen auf die polymerisierenden Monomere M, eingestellt werden. Als Regler kommen insbesondere organische Thioverbindungen, ferner Allylalkohole und Aldehyde in Betracht.

Im Anschluss an die eigentliche Polymerisationsreaktion ist es gegebenenfalls erforderlich, die erfindungsgemäßen, wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z. B. in der DE-A 44 35 423, DE-A 44 19 518 sowie in der DE-A 44 35 422 aufgeführt sind, erfolgen. Bevorzugt wird die Nachpolymerisation mit einem Redoxinitiatorsystem aus wenigstens einem organischen Peroxid und einem organischen Sulfit durchgeführt.

Nach Beendigung der Polymerisation können die erhaltenen Polymerdispersionen vor ihrer erfindungsgemäßen Verwendung durch Zugabe von Säuren oder Basen auf den gewünschten pH-Wert eingestellt werden.

Auf diese Weise erhält man stabile, wässrige Polymerdispersionen, welche wenigstens einen insektiziden Wirkstoff in den Polymerteilchen der Dispersion enthalten. Daneben enthalten die so erhaltenen Dispersionen die oben genannten oberflächenaktiven Substanzen. Die so erhaltenen Wirkstoffzubereitungen zeichnen sich durch eine hohe Stabilität und einen geringen Gehalt an flüchtigen organischen Verbindungen aus, die üblicherweise nicht mehr als 1 Gew.-%, häufig nicht mehr als 0,1 Gew.-% und insbesondere nicht mehr als 500 ppm, bezogen auf das Gesamtgewicht der Zusammensetzung ausmachen. Flüchtige Verbindungen sind hier und im Folgenden alle organischen Verbindungen, die bei Normaldruck einen Siedepunkt unterhalb 200 °C aufweisen.

Der Feststoffgehalt der erfindungsgemäßen Zusammensetzungen wird in erster Näherung durch den Wirkstoff und das Polymerisat bestimmt und liegt in der Regel im Bereich von 10 bis 60 Gew.-% und insbesondere im Bereich von 20 bis 50 Gew.-%.

Die so erhältlichen Wirkstoffzusammensetzungen können als solche oder nach Verdünnung direkt eingesetzt werden. Außerdem können die erfindungsgemäßen Zusammensetzungen noch übliche Zusatzstoffe (Additive) enthalten, z. B. die Viskosität verändernde Additive (Andicker, Verdicker), Antischaummittel, Bakterizide und Frostschutzmittel.

Geeignete Verdicker sind Verbindungen, die der Formulierung ein pseudoplastisches Fließverhalten verleihen, d. h. hohe Viskosität im Ruhezustand und niedrige Viskosität im bewegten Zustand. Hier sind beispielsweise Polysaccharide wie Xanthan Gum^{®} (Kelzan^{®} der Fa. Kelco), Rhodopol^{®} 23 (Rhone Poulenc) oder Veegum^{®} (Firma R.T. Vanderbilt) sowie Schichtmineralien, die gegebenenfalls organisch modifiziert sind, wie Attaclay^{®} (Firma Engelhardt) zu nennen, wobei Polysaccharide wie Xanthan-Gum^{®} bevorzugt verwendet werden.

Als für die erfindungsgemäßen Dispersionen geeignete Antischaummittel kommen beispielsweise Silikonemulsionen (wie z. B. Silikon^{®} SRE, Firma Wacker oder Rhodorsil^{®} der Firma Rhodia), langkettige Alkohole, Fettsäuren, fluororganische Verbindungen und deren Gemische in Betracht.

Bakterizide können zur Stabilisierung den erfindungsgemäßen Zusammensetzungen gegen Befall mit Mikroorganismen zugesetzt werden. Geeignete Bakterizide sind beispielsweise Proxel^{®} der Fa. Avecia (bzw. Fa. Arch) oder Acticide^{®} RS der Fa. Thor Chemie und Kathon^{®} MK der Firma Rohm & Haas.

Geeignete Frostschutzmittel sind organische Polyole, z. B. Ethylenglycol, Propylenglycol oder Glycerin. Diese werden üblicherweise in Mengen von nicht mehr als 10 Gew.-%, bezogen auf das Gesamtgewicht der Wirkstoffzusammensetzung eingesetzt.

Gegebenenfalls können die erfindungsgemäßen Wirkstoffzusammensetzungen 1 bis 5 Gew.-%, bezogen auf die Gesamtmenge der hergestellten Formulierung Mittel zur pH-Wert Regulation enthalten, beispielsweise Puffer, wobei sich die Menge und Art des eingesetzten Puffers nach den chemischen Eigenschaften des Wirkstoffes bzw. der Wirkstoffe richtet. Beispiele für Mittel zur Einstellung des pH-Werts sind Alkalisalze schwacher anorganischer oder organischer Säuren wie z. B. Phosphorsäure, Borsäure, Essigsäure, Propionsäure, Citronensäure, Fumarsäure, Weinsäure, Oxalsäure und Bernsteinsäure.

Daneben können die erfindungsgemäßen wässrigen Zusammensetzungen mit konventionellen Bindemitteln, beispielsweise wässrigen Polymerdispersionen, wasserlöslichen Harzen, beispielsweise wasserlöslichen Alkydharzen, oder mit Wachsen formuliert werden.

Für die Verwendung zum Schutz lignocellulosehaltiger Materialien, insbesondere zum Holzschutz, können die erfindungsgemäßen wässrigen Wirkstoffzusammensetzungen auch mit klassischen wasserlöslichen Holzschutzmitteln, insbesondere mit deren wässrigen Lösungen oder Suspensionen, formuliert werden, um die Gesamtwirksamkeit gegen holzzerstörende Organismen zu verbessern. Hierbei handelt es sich beispielsweise um wässrige Zubereitungen konventioneller Holzschutzsalze, beispielsweise von Salzen auf Basis von Borsäure und Alkaliboraten, auf Basis von quaternären Ammoniumverbindungen, z. B. Trimethyl- und Triethyl-C₆-C₃₀-alkylammoniumsalze wie Cocotrimethylammoniumchlorid, Trimethylcetylammoniumsalze, Dimethyl- und Diethyl-di-C₄-C₂₀-alkylammoniumsalze wie Didecyldimethylammoniumchlorid- und -bromid, Dicocodimethylammoniumchlorid, C₁-C₂₀-Alkyl-di-C₁-C₄-alkylbenzylammoniumsalze wie Cocobenzyldimethylammoniumchlorid, Methyl- und Ethyl-di-C₄-C₂₀-alkylpoly(oxyethyl)-ammoniumsalze, z. B. Didecylmethylpoly(oxyethyl)ammoniumchlorid und -propionat sowie die Borate, Carbonate, Formiate, Acetate, Hydrogencarbonate, Sulfate und Methosulfate, wässrige Zubereitungen von Kupfer-Amin-Komplexen, insbesondere wässrige Zubereitungen von Kupferethanolamin-haltigen Salzen, beispielsweise Cu-HDO. Selbstverständlich können die erfindungsgemäßen wässrigen Wirkstoffzubereitungen auch mit anderen wässrigen fungiziden und insektiziden Wirkstoffzusammensetzungen formuliert werden, beispielsweise mit konventionellen Emulsionskonzentraten, Suspensionskonzentraten, sowie Suspoemulsionskonzentraten von Fungiziden und Insektiziden.

Beispiele für fungizide Wirkstoffe, die mit den erfindungsgemäßen Wirkstoffzusammensetzungen coformuliert werden können, umfassen die im Compendium of Pesticide Common Names: http://www.hclrss.demon.co.uk/class-fungicides.html (Index of common names) als Fungizide aufgeführten Verbindungen. Hierzu zählen beispielsweise:
- Acylalanine wie Benalaxyl, Metalaxyl, Ofurace, Oxadixyl;
- Morpholinverbindungen wie Aldimorph, Dodine, Dodemorph, Fenpropimorph, Fenpropidin, Guazatine, Iminoctadine, Spiroxamin, Tridemorph;
- Anilinopyrimidine wie Pyrimethanil, Mepanipyrim oder Cyrodinyl;
- Antibiotika wie Cycloheximid, Griseofulvin, Kasugamycin, Natamycin, Polyoxin oder Streptomycin;
- Azole wie Azaconazol, Bitertanol, Bromoconazol, Cyproconazol, Dichlobutrazol, Difenoconazole, Dinitroconazol, Epoxiconazol, Fenbuconazol, Fluquiconazol, Flusilazol, Flutriafol, Ketoconazol, Hexaconazol, Imazalil, Metconazol, Myclobutanil, Penconazol, Propiconazol, Prochloraz, Prothioconazol, Tebuconazol, Tetraconazol, Triadimefon, Triadimenol, Triflumizol, Triticonazol;
- Dicarboximide wie Iprodion, Myclozolin, Procymidon, Vinclozolin;
- Dithiocarbamate wie Ferbam, Nabam, Maneb, Mancozeb, Metam, Metiram, Propineb, Polycarbamat, Thiram, Ziram, Zineb;
- Heterocylische Verbindungen wie Anilazin, Benomyl, Boscalid, Carbendazim, Carboxin, Oxycarboxin, Cyazofamid, Dazomet, Dithianon, Famoxadon, Fenamidon, Fenarimol, Fuberidazol, Flutolanil, Furametpyr, Isoprothiolan, Mepronil, Nuarimol, Probenazol, Proquinazid, Pyrifenox, Pyroquilon, Quinoxyfen, Silthiofam, Thiabendazol, Thifluzamid, Thiophanat-methyl, Tiadinil, Tricyclazol, Triforine;
- Nitrophenylderivate, wie Binapacryl, Dinocap, Dinobuton, Nitrophthal-isopropyl;
- Phenylpyrrole wie Fenpiclonil oder Fludioxonil;
- Strobilurine wie Dimoxystrobin, Fluoxastrobin, Kresoxim-methyl, Metominostrobin, Orysastrobin, Picoxystrobin, Pyraclostrobin und Trifloxystrobin;
- sonstige Fungizide wie Acibenzolar-S-methyl, Benzoylbenzoat, Dodecylguanidin-Hydrochlorid, Benthiavalicarb, Carpropamid, Chlorothalonil, Cyflufenamid, Cymoxanil, Diclomezin, Diclocymet, Diethofencarb, Edifenphos, Ethaboxam, Fenhexamid, Fentin-Acetat, Fenoxanil, Ferimzone, Fluazinam, Fosetyl, Fosetyl-Aluminium, Iprovalicarb, Hexachlorbenzol, Metrafenon, Pencycuron, Propamocarb, Phthalid, Toloclofos-methyl, Quintozene, Zoxamid;
- Sulfensäurederivate, insbesondere Sulfenamide wie Captafol, Captan, Dichlofluanid, Folpet, Tolylfluanid;
- Zimtsäureamide und Analoge wie Dimethomorph, Flumetover oder Flumorph.

Hierzu zählen weiterhin:
- Iodverbindungen Diiodmethyl-p-tolylsulfon, 3-Iod-2-propinylalkohol, 4-Chlorphenyl-3-iodpropargylformal, 3-Brom-2,3-diiod-3-propenylethylcarbonat, 2,3,3-Triiodallylalkohol, 3-Brom-2,3-diiod-2-propenylalkohol, 3-Iod-2-propinyl-n-butylcarbamat, 3-lod-2-propinyl-n-hexylcarbamat, 3-Iod-2-propinylphenylcarbamat, O-1-(6-Iod-3-oxohex-5-inyl)butylcarbamt, O-1-(6-Iod-3-oxohex-5-inyl)phenylcarbamat, Napcocide;
- Phenolderivate wie Tribromphenol, Tetrachlorphenol, 3-Methyl-4-chlorphenol, Dichlorophen, o-Phenylphenol, m-Phenylphenol, 2-Benzyl-4-chlorphenol;
- Isothiazolinone wie N-Methylisothiazolin-3-on, 5-Chloro-N-methylisothiazolin-3-on, 4,5-Dichloror-N-octylisothiazolin-3-on, N-Octyl-isothiazolin-3-on;
- (Benz)isothiazolinone wie 1,2-Benzisothiazol-3(2H)on, 4,5-Trimethylisothiazol-3-on, 2-Octyl-2H-isothiazol-3-on;
- Pyridine wie 1-Hydroxy-2-pyridinthion (und ihre Na-, Fe-, Mn-, Zn-Salze), Tetrachlor-4-methylsulfonylpyridin;
- Metallseifen wie Zinn-, Kupfer-, Zinknaphthenat, -octoat, -2-ethylhexanoat, -oleat, -phosphat, -benzoat;
- Organozinnverbindungen, z. B. Tributyl(TBT)zinnverbindungen wie Tributylzinn und Tributyl(mononapthenoyloxy)zinnderivate;
- Dialkyldithiocarbamat und die Na- und Zn-Salze von Dialkyldithiocarbamaten, Tetramethylthiuramdisulfid;
- Nitrile wie 2,4,5,6-Tertrachlorisophthalodinitril;
- Benzthiazole wie 2-Mercaptobenzothiazol;
- Chinoline wie 8-Hydroxychinolin und deren Cu-Salze;
- Tris-N-(cyclohexyldiazeniumdioxy)-aluminium, N-(Cyclohexyldiazeniumdioxy)-tributylzinn, Bis-N-(cyclohexyldiazeniumdioxy)-kupfer;
- 3-Benzo(b)thien-2-yl-5,6-dihydro-1,4,2-oxathiazin-4-oxid (Bethoxazin).

Im Hinblick auf die Verwendung der erfindungsgemäßen Zusammensetzungen zum Schutz lignocellulosehaltiger Materialien sind insbesondere solche Fungizide bevorzugt, die beispielsweise gegenüber Schimmelpilzen, holzverfärbenden und holzzerstörenden Pilze oder sonstigen holzschädigenden Mikroorganismen wirksam sind: Beispiele für holzschädigende Mikroorganismen sind:
holzverfärbende Pilze:
   - Ascomyceten wie Ophiostoma sp. (z. B. Ophiostoma piceae, Ophiostoma piliferum), Ceratocystis sp. (z. B. Ceratocystis coerulescens), Aureobasidium pullulans, Sclerophoma sp. (z. B. Sclerophoma pityophila);
   - Deuteromyceten wie Aspergillus sp. (z. B. Aspergillus niger), Cladosporium sp. (z. B. Cladosporium sphaerospermum), Penicillium sp. (z. B. Penicillium funiculosum), Trichoderma sp. (z. B. Trichoderma viride), Alternaria sp. (z. B. Alternaria alternata), Paecilomyces sp. (z. B. Paecilomyces variotii);
   - Zygomyceten wie Mucor sp. (z. B. Mucor hiemalis); und
holzzerstörende Pilze:
   - Ascomyceten wie Chaetomium sp. (z. B. Chaetomium globosum), Humicola sp. (z. B. Humicola grisea), Petriella sp. (z. B. Petriella setifera), Trichurus sp. (z. B. Trichurus spiralis);
   - Basidiomyceten wie Coniophora sp. (z. B. Coniophora puteana), Coriolus sp. (z. B. Coriolus versicolor), Gloeophyllum sp. (z. B. Gloeophyllum trabeum), Lentinus sp. (z. B. Lentinus lepideus), Pleurotus sp. (z. B. Pleurotus ostreatus), Poria sp. (z. B. Poria placenta, Poria vaillantii), Serpula sp. (z. B. Serpula lacrymans) und Tyromyces sp. (z. B. Tyromyces palustris).

Hiergegen sind insbesondere fungizide Wirkstoffe aus der Gruppe der Conazole, der Gruppe der Morpholine, der Gruppe der Strobilurine, der Gruppe der Thiazole, der Gruppe der Sulfenamide und der Gruppe der lodverbindungen geeignet. Bevorzugt sind insbesondere solche Fungizide, die in der Biozidverordnung der Europäischen Union (VERORDNUNG (EG) Nr. 2032/2003 DER KOMMISSION vom 4. November 2003) in der Klasse 08 (Holzschutzmittel) genannt sind.

Die erfindungsgemäßen wässrigen Wirkstoffzusammensetzungen können den fungiziden Wirkstoff in einer Menge von 0,1 bis 30 Gew.-%, vorzugsweise in einer Menge von 0,2 bis 25 Gew.-% und insbesondere in einer Menge von 0,5 bis 20 Gew.-%, bezogen auf das Gesamtgewicht der Zusammensetzung enthalten.

Durch das Abmischen der erfindungsgemäßen wässrigen Wirkstoffzusammensetzung mit konventionellen wässrigen Zubereitungen der vorgenannten Wirkstoffe erzielt man zum einen eine Verbreiterung des Wirkspektrums, wenn die konventionelle Zubereitung einen anderen Wirkstoff enthält als die erfindungsgemäße wässrige Wirkstoffzusammensetzung. Zum anderen gehen die Vorteile der erfindungsgemäßen Wirkstoffzusammensetzungen durch das Formulieren mit konventionellen wässrigen Wirkstoffzubereitungen, insbesondere die verbesserte Haftung an lignocellulosehaltigen Materialien und speziell an Holz, nicht verloren. Folglich kann man die Anwendungseigenschaften einer konventionellen wässrigen Wirkstoffzubereitung durch Formulierung mit einer erfindungsgemäßen insektiziden wässrigen Wirkstoffzusammensetzung des gleichen Wirkstoffs verbessern.

Die erfindungsgemäßen Wirkstoffzusammensetzungen sind mit einer Reihe von Vorteilen verbunden. Zum einen handelt es sich um stabile wässrige Formulierungen von insektiziden Wirkstoffen, die in Wasser nicht oder nur in geringem Ausmaß löslich sind. Insbesondere werden die bei konventionellen Suspensions-Formulierungen sowie bei Mikro- oder Nanodispersionen der Wirkstoffe beobachteten Phasentrennprobleme und ein Absetzen des Wirkstoffs nicht beobachtet, auch bei Anwendung drastischer Bedingungen wie sie in den für die Imprägnierung von Holz mit insektiziden Wirkstoffen angewendeten Prozessen auftreten. Der Gehalt an organischen flüchtigen Verbindungen ist bei üblicher Additivierung geringer als bei vergleichbaren konventionellen Formulierungen sowie im Vergleich zu Mikro- bzw. Nanodispersionen von Wirkstoffen. Gleichzeitig ist der Emulgatoranteil geringer, bezogen auf den eingesetzten Wirkstoff. Die Auswaschung des Wirkstoffs aus dem behandelten Material bei Einwirkung von Wasser (Leaching) ist im Vergleich zu anderen Formulierungen deutlich herabgesetzt. Weiterhin werden Wechselwirkungen der Wirkstoffe mit anderen Formulierungsbestandteilen oder Co-Wirkstoffen, wie sie bei konventioneller Formulierung häufig auftreten, nicht beobachtet. Zudem wird der Abbau der Wirkstoffe durch Substrat- oder Umwelteinflüsse, wie pH-Wert des Milieus oder UV-Strahlung verlangsamt oder gar ganz unterbunden. Eine verringerte Wirksamkeit des Wirkstoffs durch die Einbindung in eine Polymermatrix wird überraschenderweise nicht beobachtet.

Die vorliegende Erfindung betrifft auch ein Verfahren zum Schutz lignocellulosehaltiger Materialien, insbesondere Holz, vor Befall mit oder Zerstörung durch Schadinsekten, insbesondere durch die zuvor genannten holzschädigenden Insekten. Das Verfahren umfasst die Behandlung des lignocellulosehaltigen Materials mit einer erfindungsgemäßen wässrigen Insektizid-Zusammensetzung und/oder mit einer daraus hergestellten pulverförmigen Insektizid-Zusammensetzung.

Lignocellulosehaltige Materialien sind neben Holz und Folgeprodukten, z. B. Holzzuschnitte, Sperrholz, Spanplatten, MDF-Platten, OSB-Platten, weiterhin Zellstoffe und Zwischenprodukte bei der Papierherstellung, Gewebe auf Lignocellulosebasis wie Baumwolle, Materialien auf Basis verholzter Einjahrespflanzen, beispielsweise Formkörper aus Rapsschäben, Bargasseplatten, Strohplatten etc. Zu den lignocellulosehaltigen Materialien zählen weiterhin Gegenstände aus lignocellulosehaltigen Fasermaterialien wie Gewebe, Vliesstoffe, Papier, Pappe, Wärmedämmmaterialien, Seile, Taue etc. Geeignete Fasermaterialien für das erfindungsgemäße Verfahren umfassen Textilfasern wie Flachs, Leinen, Hanf, Jute, Baumwolle und Chinagras, Papierfasern wie Flachs, Leinen, Hanf, Bambusfasern, Fasern aus Papiermaulbeerbaum und Holzzellstoff, weiterhin Nesselfaser, Manilahanf, Sisal, Kenaf und Kokosfaser.

Das Behandeln kann in an sich bekannter Weise je nach Art des Substrats durch Besprühen, Streichen, Tauchen oder Tränken des Substrats mit einer unverdünnten oder einer mit Wasser verdünnten erfindungsgemäßen Wirkstoffzusammensetzung oder durch Fluten des Substrats in einer unverdünnten oder mit Wasser verdünnten erfindungsgemäßen wässrigen Wirkstoffzusammensetzung erfolgen. Die erfindungsgemäßen Zusammensetzungen können auch bei der Herstellung des lignocellulosehaltigen Materials, beispielsweise als Binder oder als Leimungsmittel, zugegen sein.

Sofern es sich bei dem erfindungsgemäßen Substrat um Holz handelt, kann man die im Holzschutz üblichen Verfahren einsetzen, wie sie beispielsweise aus Ullmann's Encyclopedia of Industrial Chemistry, Wood preservation, 5. Auflage auf CD-ROM, Wiley VCH, Weinheim, 1997, Kapitel 7, bekannt sind. Hierzu zählen insbesondere Verfahren zur Tränkung des Holzes mit Hilfe von Druckunterschieden, z. B. das Kesseldruckverfahren sowie die Doppelvakuumtränkung.

Das Behandeln derartiger Materialien mit den erfindungsgemäßen Wirkstoffzusammensetzungen kann nach den hierfür üblichen Verfahren erfolgen und wird an die jeweils technischen Gegebenheiten in an sich bekannter Weise angepasst werden. Die Anwendungskonzentration und das Einbringen hängen dabei vom Gefährdungsgrad des Materials sowie von dem jeweiligen Behandlungsverfahren ab und liegt üblicherweise im Bereich von 0,05 mg bis 10 g Wirkstoff pro kg Material.

Bei Holzfolgeprodukten und Lignocellulose enthaltenden Materialien wird man häufig die unverdünnte wirkstoffhaltige Zusammensetzung einsetzen, beispielsweise zusammen mit dem verwendeten Bindemittel als Cobindemittel. Selbstverständlich ist auch ein separates Behandeln während oder nach der Herstellung, beispielsweise der Beleimung, möglich.

Neben den erwähnten Materialien auf Lignocellulosebasis können die erfindungsgemäßen wässrigen Wirkstoffzusammensetzung auch in anderen Bereichen des Materialschutzes gegen Befall mit tierischen Schädlingen eingesetzt werden. Beispielsweise können Häute, Felle oder Leder mit den erfindungsgemäßen wässrigen Zusammensetzungen oder den daraus hergestellten Pulvern wirksam gegen einen Befall mit tierischen Schädlingen geschützt werden.

Die folgenden Beispiele sollen die Erfindung verdeutlichen, ohne sie jedoch einzuschränken:

### Beispiel 1: Dispersionen D1 und D2

### Allgemeine Herstellungsvorschrift:

465 g entionisiertes Wasser, 5 Gew.-% von Zulauf 1 und 10 Gew.-% von Zulauf 2 erhitzte man auf 80 °C. Nach 10 min begann man mit der Zugabe der Restmenge der Zuläufe 1 und 2. Die Zulaufdauer betrug 3,5 h. Nach Beendigung der Zuläufe behielt man die Mischung weitere 30 min bei 80 °C, kühlte dann auf Raumtemperatur ab.

### Zulauf 1:

| | |
|---|---|
| 496,1 g | entionisiertes Wasser |
| 7,6 g | Schwefelsäure (50 gew.-%ig) |
| 361,0 g | Methylmethacrylat |
| 19,0 g | Dimethylaminoethylmethacrylat |
| 57,0 g | Emulgatorlösung E1 |
| x g | Wirkstoff (siehe Tabelle 1) |

### Zulauf 2:

Lösung von 1,5 g 2,2-'Azobis(N,N'-dimethylisobutyramidin) in 63,3 g entionisiertem Wasser

Emulgatorlösung E1: 40 gew.-%ige wässrige Lösung eines durch sukzessive Ethoxylierung von Stearylamin mit 4 - 5 Mol Ethylenoxid und anschließende Quaternisierung mit Dimethylsulfat erhaltenen kationischen Emulgators.

**Tabelle 1**

| Dispersion | Wirkstoff | x [g] |
|---|---|---|
| D1 | Chlorfenapyr | 5 |
| D2 | α-Cypermethrin | 65 |

Die erhaltenen Dispersionen hatten einen Feststoffgehalt von ca. 29,5 Gew.-% und eine Viskosität von 100 mPa·s. Das Polymerisat zeigte eine Glasübergangstemperatur bei 87°C, bestimmt mittels DSC. Die mittlere Teilchengröße, bestimmt mittels Lichtstreuung, lag bei 157 bis 175 nm.

### Beispiel 2: Dispersionen D3 und D4

### Allgemeine Herstellungsvorschrift:

465 g entionisiertes Wasser, Zulauf 1 und 10 Gew.-% von Zulauf 2 erhitzte man auf 80 °C. Nach 10 min begann man mit der Zugabe der Restmenge von Zulauf 2 und von Zulauf 3. Die Zulaufdauer von Zulauf 2 und Zulauf betrug 3,5 h. Nach Beendigung der Zuläufe behielt man die Mischung weitere 30 min bei 80 °C, kühlte dann auf Raumtemperatur ab.

### Zulauf 1:

| | |
|---|---|
| 46,1 g | entionisiertes Wasser |
| 38,0 g | Styrol |
| 7,6 g | 3-(N,N)-Dimethylaminopropylmethacrylamid |
| 14,2 g | Emulgatorlösung E1 (s.o.) |

### Zulauf 2:

Lösung von 1,5 g 2,2-'Azobis(N,N'-dimethylisobutyramidin) in 63,3 g entionisiertem Wasser

### Zulauf 3:

| | |
|---|---|
| 450,1 g | entionisiertes Wasser |
| 7,6 g | Acrylsäure |
| 270,0 g | Methylmethacrylat |
| 57,0 g | Dimethylaminoethylmethacrylat |
| 42,8 g | Emulgatorlösung E1 (s.o.) |
| x g | Wirkstoff (siehe Tabelle 2) |

**Tabelle 2**

| Dispersion | Wirkstoff | x [g] |
|---|---|---|
| D3 | Chlorfenapyr | 61,8 |
| D4 | α-Cypermethrin | 42,9 |

Die erhaltenen Dispersionen hatten einen Feststoffgehalt von ca. 29,8 Gew.-% und eine Viskosität von 105 mPa·s. Das Polymerisat zeigte eine Glasübergangstemperatur bei 110 °C, bestimmt mittels DSC. Die mittlere Teilchengröße, bestimmt mittels Lichtstreuung, lag bei 155 bis 175 nm.

### Beispiel 3: Dispersion D5

226 g entionisiertes Wasser, 5 Gew.-% von Zulauf 1 und 10 Gew.-% von Zulauf 2 erhitzte man auf 80 °C. Nach 10 min begann man mit der Zugabe der Restmenge der Zuläufe 1 und 2. Die Zulaufdauer betrug 3,5 h. Nach Beendigung der Zuläufe behielt man die Mischung weitere 30 min bei 80 °C, kühlte dann auf Raumtemperatur ab.

### Zulauf 1:

| | |
|---|---|
| 140,0 g | entionisiertes Wasser |
| 3,0 g | H₂SO₄ |
| 22,5 g | Emulgatorlösung E1 |
| 30,0 g | Styrol |
| 112,5 g | Methylmethacrylat |
| 7,5 g | Dimethylaminoethylmethacrylat |
| 21,71 g | alpha-Cypermethrin |

### Zulauf 2: 0,6 g 2,2'-Azobis(N,N'-dimethylisobutyramidin) in 25 g Wasser

Die erhaltene Dispersion hatte einen Feststoffgehalt von 28,7 Gew.-% und eine Viskosität von 100 mPa·s. Das Polymerisat zeigte eine Glasübergangstemperatur bei 78,3°C, bestimmt mittels DSC. Die mittlere Teilchengröße, bestimmt mittels Lichtstreuung, lag bei 107 nm.

### Referenzbeispiel: anionische Dispersion D6 (nicht erfindungsgemäß)

577 g entionisiertes Wasser, 5 Gew.-% von Zulauf 1 und 10 Gew.-% von Zulauf 2 erhitzte man auf 80 °C. Nach 10 min begann man mit der Zugabe der Restmenge der Zuläufe 1 und 2. Die Zulaufdauer betrug 3,5 h. Nach Beendigung der Zuläufe behielt man die Mischung weitere 30 min bei 80 °C, kühlte dann auf Raumtemperatur ab.

### Zulauf 1:

| | |
|---|---|
| 420,0 g | Wasser |
| 31,3 g | Emulgator E2 |
| 23,5 g | Methacrylsäure |
| 446,5 g | Methylmethacrylat |
| 14,1 g | alpha-Cypermethrin |

### Zulauf 2: 75,2 g einer 2,5-gew.-%igen Lösung von Natriumperoxodisulfat in Wasser

### Emulgator E2 : Natriumsalz des Schwefelsäurehalbesters eines ethoxilierten C₁₂-₁₄-Alkanols (Ethoxilierungsgrad 30)

Die erhaltene Dispersion hatte einen Feststoffgehalt von 29,8 Gew.-% und eine Viskosität von 100 mPa·s. Das Polymerisat zeigte eine Glasübergangstemperatur bei 122,7°C, bestimmt mittels DSC. Die mittlere Teilchengröße, bestimmt mittels Lichtstreuung, lag bei 178 nm.

### Beispiel 4: Dispersionen D7 bis D16

In zu Beispiel 2 analoger Weise wurden wässrige Polymerdispersionen D7 bis D16 hergestellt, wobei die Monomerzusammensetzungen von Zulauf 1 und Zulauf 3 in Tabelle 3 angegeben sind. Das Gewichtsverhältnis der Monomere in Zulauf 1 zu den Monomeren in Zulauf 3 war in allen Fällen 4:6. In allen Fällen enthielt Zulauf 3 9 pphm α-Cypermethrin, bezogen auf die in Zulauf 3 enthaltenen Monomere. In der Dispersion D9 enthielt Zulauf 1 zusätzlich 5 pphm α-Cypermethrin, bezogen auf die in Zulauf 1 enthaltenen Monomere.

**Tabelle 3**

| | D7 | D8 | D9 | D10 | D11 | D12 | D13 | D14 | D15 | D16 |
|---|---|---|---|---|---|---|---|---|---|---|
| Zulauf 1 | | | | | | | | | | |
| Styrol pphm¹⁾ | 78 | 100 | 99,8 | 100 | 99,8 | -- | -- | -- | 77,8 | 77,8 |
| MMA pphm¹⁾ | 22 | -- | -- | -- | -- | 100 | 99,8 | 99,9 | 22 | 22 |
| BDGA pphm¹⁾ | -- | -- | -- | -- | -- | -- | -- | -- | 0,2 | -- |
| AMA pphm¹⁾ | -- | -- | 0,2 | -- | 0,2 | -- | 0,2 | 0,1 | -- | 0,2 |
| Zulauf 3 | | | | | | | | | | |
| Styrol pphm¹⁾ | -- | 20 | -- | -- | -- | 20 | 20 | 20 | -- | -- |
| MMA pphm¹⁾ | 95 | 75 | 95 | 95 | 95 | 75 | 75 | 75 | 95 | 95 |
| DMAEMA pphm¹⁾ | 5 | 5 | 5 | 5 | 5 | 5 | 5 | 5 | 5 | 5 |

| | | | | | | | | | | |
|---|---|---|---|---|---|---|---|---|---|---|
| 1) pphm: Gewichtsprozent, bezogen auf die im Zulauf enthaltenen Monomere MMA: Methylmethacrylat BDGA: Butylglykol-Diacrylat AMA: Allylmethacrylat DMAEMA: Dimethylaminoethylmethacrylat | | | | | | | | | | |

Alle Dispersionen wiesen mittlere Teilchengrößen unterhalb 100 nm auf. Die Dispersionen D12, D13 und D14 hatten eine Kern-Schale-Morphologie, wobei die Schale Styrol aufwies (bestimmt in einer Butylmethacrylat-Matrix, mittels Transmissionselektronenmikroskopie und RuO₄-Kontrastierung). Alle übrigen Dispersionen wiesen eine sogenannte Brombeer-Morphologie auf.

### Anwendungstechnische Prüfung:

### Insektizide Wirksamkeit

Die insektizide Wirkung der Zusammensetzungen ließ sich durch den folgenden Versuch zeigen:

Die erfindungsgemäße wässrige Wirkstoffzusammensetzung aus Beispiel 3 wurde mit Wasser auf drei unterschiedliche Wirkstoffkonzentrationen verdünnt. Zu Vergleichszwecken wurde die nicht erfindungsgemäße anionische Dispersion D6 untersucht, sowie α-Cypermethrin in Aceton gelöst und die Lösung mit weiterem Aceton auf die entsprechenden Wirkstoffkonzentrationen verdünnt.

Zur Bestimmung der Wirksamkeitsgrenzen der erfindungsgemäßen Zusammensetzung gegenüber holzzerstörenden Bodentermiten (*Reticulitermes santonensis*) wurden Holzproben aus *Pinus* spp. mit den Abmessungen 25 x 25 x 6 mm³ (Southern Yellow Pine) nach dem amerikanischen Prüfstandard AWPA E1-97 (siehe hierzu "Standard method for laboratory evaluation to determine resistance to subterranean termites", American Wood-Preservers' Association, 2001) im Zwangsversuch nach Auswaschbeanspruchung gemäß DIN EN 84: 1997-01 (siehe hierzu "beschleunigte Alterung von behandeltem Holz vor biologischen Prüfungen", Europäisches Komitee für Normung) getestet.

Die durch den Termitenangriff bewirkte Zerstörung des Holzes wurde nach 4-wöchiger Prüfzeit durch eine visuelle Bonitierung der Probehölzer gemäß AWPA E1-97 erfasst. Darüber hinaus wurde die Mortalitätsrate unter den Termiten abgeschätzt.

Wenn die Probehölzer noch intakt waren (Bewertung mit 10 bis 9 "sound-light attack" auf einer Skala von 10 bis 0) wird der durch das Schutzmittel bei einer bestimmten Wirkstoffkonzentration erreichte Schutz des Holzes als ausreichend angesehen.

Für die erfindungsgemäße wässrige kationisch ausgestaltete Wirkstoffzusammensetzung wurde ein Grenzwert für α-Cypermethrin nach Auswaschung von ≥ 20 g/m³ bestimmt. Bei dieser Mindestkonzentration ist das Holz ausreichend geschützt (im vorliegenden Fall Bewertung 10 "sound, surface nibbles permitted"). Für den zu Vergleichszwecken in reinem Aceton gelösten Wirkstoff lag der Grenzwert nach Auswaschung bei 29-40 g/m³ (siehe Tabelle 3).

**Tabelle 3:**

| Prüftermite: *R. santonensis* Dispersion | Grenzen der Wirksamkeit [g/m³] nach Auswaschbeanspruchung (EN 84) |
|---|---|
| D5 | ≥ 20 |
| D6 | 21 - 33 |
| Lösung von α-Cypermethrin | 29 - 40 |

Für die Bewertung eines Holzschutzmittels in der Praxis ist insbesondere der obere Wert nach Auswaschung maßgeblich. Die in Tabelle 3 dargestellten Ergebnisse belegen, dass die erfindungsgemäße kationisch ausgestaltete Wirkstoffzusammensetzung D5 eine bessere Wirksamkeit gegen holzzerstörende Bodentermiten zeigt als die entsprechend anionisch ausgestaltete Formulierung D6 bzw. als der reine Wirkstoff in organischem Lösungsmittel.

## Patentansprüche

1. Insektizid-Zusammensetzung in Form einer wässrigen Dispersion feinteiliger, wenigstens einen insektiziden organischen Wirkstoff mit einer Wasserlöslichkeit von nicht mehr als 5 g/l bei 25 °C/1013 mbar enthaltender Polymerpartikel mit einer mittleren Teilchengröße, bestimmt durch dynamische Lichtstreuung, von nicht mehr als 500 nm, wobei die den wenigstens einen insektiziden Wirkstoff enthaltenden Polymerpartikel eine positive Oberflächenladung aufweisen und die wässrige Dispersion der wirkstoffhaltigen Polymerpartikel erhältlich ist durch radikalische wässrige Emulsionspolymerisation einer Monomerzusammensetzung ethylenisch ungesättigter Monomere M, worin die ethylenisch ungesättigten Monomere M den wenigstens einen insektiziden Wirkstoff in gelöster Form enthalten.

2. Insektizid-Zusammensetzung nach Anspruch 1, worin die Monomere M 0,1 bis 20 Gew.-%, bezogen auf die Gesamtmenge der Monomere M, wenigstens eines monoethylenisch ungesättigten Monomeren M-k, das wenigstens eine kationische Gruppe und/oder wenigstens eine im Wässrigen protonierbare Gruppe aufweist, umfassen.

3. Insektizid-Zusammensetzung nach Anspruch 2, wobei das Monomer M-k ausgewählt ist unter Monomeren der allgemeinen Formel I 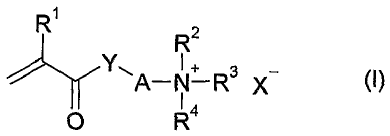 worin
R¹ Wasserstoff oder C₁-C₄-Alkyl,
R², R³ unabhängig voneinander C₁-C₄-Alkyl, und
R⁴ Wasserstoff oder C₁-C₄-Alkyl bedeuten,
Y für Sauerstoff, NH oder NR⁵ mit R⁵ = C₁-C₄-Alkyl steht,
A für C₂-C₈-Alkylen, das gegebenenfalls durch 1, 2 oder 3 nicht benachbarte Sauerstoffatome unterbrochen ist, steht und
X- für ein Anionenäquivalent steht,
und für R⁴ = H den freien Basen der Monomere der Formel I.

4. Insektizid-Zusammensetzung nach einem der vorhergehenden Ansprüche, worin die wässrige Dispersion der wirkstoffhaltigen Polymerpartikel erhältlich ist durch radikalische wässrige Emulsionspolymerisation der Monomerzusammensetzung in Gegenwart einer kationischen oberflächenaktiven Substanz.

5. Insektizid-Zusammensetzung nach einem der vorhergehenden Ansprüche, worin die Monomere M 60 bis 99 Gew.-%, bezogen auf die Gesamtmenge der Monomere M, wenigstens eines neutralen, monoethylenisch ungesättigten Monomeren M1 mit einer Wasserlöslichkeit von nicht mehr als 60 g/l bei 25 °C umfassen.

6. Insektizid-Zusammensetzung nach Anspruch 6, worin die Monomere M1 ausgewählt sind unter vinylaromatischen Monomeren, C₂-C₁₀-Alkylacry/aten und C₁-C₁₀-Alkylmethacrylaten.

7. Insektizid-Zusammensetzung nach einem der vorhergehenden Ansprüche, wobei das Polymerisat eine Glasübergangstemperatur T_{G} von wenigstens 10 °C aufweist.

8. Insektizid-Zusammensetzung nach einem der vorhergehenden Ansprüche, enthaltend den wenigstens einen insektiziden Wirkstoff in einer Menge von 0,1 bis 50 Gew.-%, bezogen auf das Gewicht der zur Herstellung des Polymerisats eingesetzten Monomere M.

9. Insektizid-Zusammensetzung nach einem der vorhergehenden Ansprüche, worin der insektizide Wirkstoff ausgewählt ist unter Pyrethroiden, Carbamaten, Organo(thio)phosphaten, arthropoden Wachstumsregulatoren, Chlorfenapyr und Neonicotinoiden.

10. Insektizid-Zusammensetzung nach einem der vorhergehenden Ansprüche, worin die Polymerteilchen den wenigstens einen insektiziden Wirkstoff als alleinigen Wirkstoff enthalten.

11. Insektizid-Zusammensetzung nach einem der vorhergehenden Ansprüche mit einem Gehalt an flüchtigen organischen Bestandteilen von weniger als 1 Gew.-%, bezogen auf das Gesamtgewicht der Zusammensetzung.

12. Insektizid-Zusammensetzung nach einem der vorhergehenden Ansprüche mit einem Feststoffgehalt von 10 bis 60 Gew.-%.

13. Verfahren zur Herstellung einer Insektizid-Zusammensetzung gemäß einem der vorhergehenden Ansprüche, umfassend eine radikalische, wässrige Emulsionspolymerisation einer Monomerzusammensetzung ethylenisch ungesättigter Monomere M, worin die ethylenisch ungesättigten Monomere M den wenigstens einen insektiziden Wirkstoff in gelöster Form enthalten, wobei die Monomere M wenigstens ein monoethylenisch ungesättigtes Monomer M-k, das wenigstens eine kationische Gruppe und/oder wenigstens eine im Wässrigen protonierbare Gruppe aufweist, umfassen und/oder die Emulsionspolymerisation in Gegenwart wenigstens einer kationischen, oberflächenaktiven Substanz erfolgt.

14. Pulverförmige Insektizidzusammensetzung, erhältlich durch Trocknen einer wässrigen Insektizidzusammensetzung nach einem der Ansprüche 1 bis 12.

15. Verwendung einer wässrigen Insektizidzusammensetzung gemäß einem der Ansprüche 1 bis 12 oder einer pulverförmigen Zusammensetzung gemäß Anspruch 14 zur Bekämpfung von Schadinsekten.

16. Verwendung einer wässrigen Insektizid-Zusammensetzung gemäß einem der Ansprüche 1 bis 12 oder einer pulverförmigen Insektizidzusammensetzung gemäß Anspruch 14 zum Schutz von lignocellulosehaltigen Materialien vor einem Befall durch Schadinsekten.

17. Verfahren zum Schutz lignocellulosehaltiger Materialien vor Befall oder Zerstörung durch Schadinsekten, umfassend die Behandlung des lignocellulosehaltigen Materials mit einer wässrigen Insektizid-Zusammensetzung gemäß einem der Ansprüche 1 bis 12 und/oder mit einer pulverförmigen Insektizid-Zusammensetzung gemäß Anspruch 14.

18. Verfahren nach Anspruch 16, wobei es sich bei dem lignocellulosehaltigen Material um Holz handelt.

## Claims

1. Insecticide composition in the form of an aqueous dispersion of finely divided polymer particles which comprise at least one insecticidal organic active ingredient with a solubility in water of not more than 5 g/l at 25°C at 1013 mbar and which have a mean particle size, determined by dynamic light scattering, of not more than 500 nm, where the polymer particles which comprise the at least one insecticidal active ingredient have a positive surface charge and where the aqueous dispersion of the active-ingredient-comprising polymer particles is obtainable by subjecting a monomer composition of ethylenically unsaturated monomers M, in which the ethylenically unsaturated monomers M comprise the at least one insecticidal active ingredient in dissolved form, to radical aqueous emulsion polymerization.

2. Insecticide composition according to Claim 1, wherein the monomers M comprise from 0.1 to 20% by weight based on the total amount of the monomers M of at least one monoethylenically unsaturated monomer M-k which has at least one cationic group and/or at least one group which is capable of protonation in an aqueous environment.

3. Insecticide composition according to Claim 2, wherein the monomer M-k is selected among monomers of the general formula I 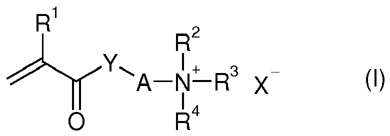 in which
R¹ is hydrogen or C₁-C₄-alkyl,
R², R³ independently of one another are C₁-C₄-alkyl
and
R⁴ is hydrogen or C₁-C₄-alkyl,
Y represents oxygen, NH or NR⁵ where R⁵ = C₁-C₄-alkyl,
A represents C₂-C₈-alkylene which is optionally interrupted by 1, 2 or 3 non-adjacent oxygen atoms, and
X⁻ represents an anion equivalent,
and, if R⁴ = H, the free bases of the monomers of the formula I.

4. Insecticide composition according to any of the preceding claims, wherein the aqueous dispersion of the active-ingredient-comprising polymer particles is obtainable by radical aqueous emulsion polymerization of the monomer composition in the presence of a cationic surface-active substance.

5. Insecticide composition according to any of the preceding claims, wherein the monomers M comprise from 60 to 99% by weight, based on the total amount of the monomers M, of at least one neutral monoethylenically unsaturated monomer M1 with a solubility in water of not more than 60 g/l at 25°C.

6. Insecticide composition according to Claim 6, wherein the monomers M1 are selected among vinyl-aromatic monomers, C₂-C₁₀-alkyl acrylates and C₁-C₁₀-alkyl methacrylates.

7. Insecticide composition according to any of the preceding claims, wherein the polymer has a glass transition temperature T_{G} of at least 10°C.

8. Insecticide composition according to any of the preceding claims, comprising the at least one insecticidal active ingredient in an amount of from 0.1 to 50% by weight, based on the weight of the monomers M employed for the preparation of the polymer.

9. Insecticide composition according to any of the preceding claims, wherein the insecticidal active ingredient is selected among pyrethroids, carbamates, organo(thio)phosphates, arthropod growth regulators, chlorfenapyr and neonicotinoids.

10. Insecticide composition according to any of the preceding claims, wherein the polymer particles comprise the at least one insecticidal active ingredient as the sole active ingredient.

11. Insecticide composition according to any of the preceding claims, wherein the volatile organic components amount to less than 1% by weight, based on the total weight of the composition.

12. Insecticide composition according to any of the preceding claims, wherein the solids amount to from 10 to 60% by weight.

13. Process for the preparation of an insecticide composition according to any of the preceding claims, comprising a radical aqueous emulsion polymerization of a monomer composition of ethylenically unsaturated monomers M, wherein the ethylenically unsaturated monomers M comprise the at least one insecticidal active ingredient in dissolved form, the monomers M comprising at least one monoethylenically unsaturated monomer M-k which has at least one cationic group and/or at least one group which is capable of being protonated in an aqueous environment and/or the emulsion polymerization taking place in the presence of at least one cationic surface-active substance.

14. Pulverulent insecticide composition, obtainable by drying an aqueous insecticide composition according to any of Claims 1 to 12.

15. Use of an aqueous insecticide composition according to any of Claims 1 to 12 or of a pulverulent composition according to Claim 14 for controlling harmful insects.

16. Use of an aqueous insecticide composition according to any of Claims 1 to 12 or of a pulverulent insecticide composition according to Claim 14 for protecting lignocellulosic materials against attack by harmful insects.

17. Method for protecting lignocellulosic materials against attack or destruction by harmful insects, comprising the treatment of the lignocellulosic material with an aqueous insecticide composition according to any of Claims 1 to 12 and/or with a pulverulent insecticide composition according to Claim 14.

18. Method according to Claim 16, wherein the lignocellulosic material is timber.

## Revendications

1. Composition d'insecticide sous forme d'une dispersion aqueuse de particules de polymère finement dispersées ayant une taille moyenne de particule, déterminée par diffusion dynamique de la lumière, n'excédant pas 500 nm, contenant au moins une substance active organique insecticide ayant une solubilité dans l'eau n'excédant pas 5 g/l à 25 °C/1013 mbars, les particules de polymère contenant ladite au moins une substance active insecticide présentant une charge superficielle positive et la dispersion aqueuse des particules de polymère contenant une substance active pouvant être obtenue par polymérisation radicalaire en émulsion aqueuse d'une composition de monomères consistant en des monomères M à insaturation éthylénique, les monomères M à insaturation éthylénique contenant ladite au moins une substance active insecticide sous forme dissoute.

2. Composition d'insecticide selon la revendication 1, dans laquelle les monomères M comprennent 0,1 à 20 % en poids, par rapport à la quantité totale des monomères M, d'au moins un monomère M-k à insaturation monoéthylénique, qui comporte au moins un groupe cationique et/ou au moins un groupe protonable en milieu aqueux.

3. Composition d'insecticide selon la revendication 2, dans laquelle le monomère M-k est choisi parmi des monomères de formule générale I 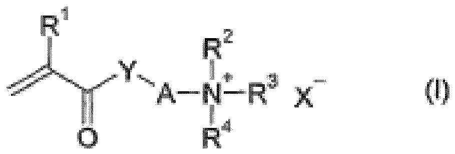 dans laquelle
R¹ représente un atome d'hydrogène ou un groupe alkyle en C₁-C₄,
R², R³ représentent indépendamment l'un de l'autre un groupe alkyle en C₁-C₄, et
R⁴ représente un atome d'hydrogène ou un groupe alkyle en C₁-C₄,
Y représente un atome d'oxygène, NH ou NR⁵, où R⁵ représente un groupe alkyle en C₁-C₄,
A représente un groupe alkylène en C₂-C₈ qui est éventuellement interrompu par 1, 2 ou 3 atomes d'oxygène non contigus, et
X représente un équivalent d'anion,
et pour R⁴ = H, les bases libres des monomères de formule I.

4. Composition d'insecticide selon l'une quelconque des revendications précédentes, dans laquelle la dispersion aqueuse des particules de polymère contenant une substance active peut être obtenue par polymérisation radicalaire en émulsion aqueuse de la composition de monomères en présence d'une substance tensioactive cationique.

5. Composition d'insecticide selon l'une quelconque des revendications précédentes, dans laquelle les monomères M comprennent 60 à 99 % en poids, par rapport à la quantité totale des monomères M, d'au moins un monomère M1 neutre à insaturation monoéthylénique, ayant une solubilité dans l'eau n'excédant pas 60 g/l à 25 °C.

6. Composition d'insecticide selon la revendication 6, dans laquelle les monomères M1 sont choisis parmi des monomères vinylaromatiques, des acrylates d'alkyle en C₂-C₁₀ et des méthacrylates d'alkyle en C₁-C₁₀.

7. Composition d'insecticide selon l'une quelconque des revendications précédentes, dans laquelle le polymérisat présente une température de transition vitreuse T_{G} de moins de 10 °C.

8. Composition d'insecticide selon l'une quelconque des revendications précédentes, contenant ladite au moins une substance active insecticide en une quantité de 0,1 à 50 % en poids, par rapport au poids des monomères M utilisés pour la préparation du polymérisat.

9. Composition d'insecticide selon l'une quelconque des revendications précédentes, dans laquelle la substance active insecticide est choisie parmi les pyréthroïdes, carbamates, organo(thio)phosphates, régulateurs de la croissance des arthropodes, le chlorfénapyr et les néonicotinoïdes.

10. Composition d'insecticide selon l'une quelconque des revendications précédentes, dans laquelle les particules de polymère contiennent ladite au moins une substance active insecticide en tant que seule substance active.

11. Composition d'insecticide selon l'une quelconque des revendications précédentes, ayant une teneur en composants organiques volatils de moins de 1 % en poids, par rapport au poids total de la composition.

12. Composition d'insecticide selon l'une quelconque des revendications précédentes, ayant une teneur en matière solide de 10 à 60 % en poids.

13. Procédé pour la préparation d'une composition d'insecticide selon l'une quelconque des revendications précédentes, comprenant une polymérisation radicalaire en émulsion aqueuse d'une composition de monomères consistant en des monomères M à insaturation éthylénique, dans laquelle les monomères M à insaturation éthylénique contiennent ladite au moins une substance active insecticide sous forme dissoute, les monomères M comprenant au moins un monomère M-k à insaturation monoéthylénique, qui comporte au moins un groupe cationique et/ou au moins un groupe protonable en milieu aqueux, et/ou la polymérisation en émulsion s'effectuant en présence d'au moins une substance tensioactive cationique.

14. Composition pulvérulente d'insecticide, pouvant être obtenue par séchage d'une composition aqueuse d'insecticide selon l'une quelconque des revendications 1 à 12.

15. Utilisation d'une composition aqueuse d'insecticide selon l'une quelconque des revendications 1 à 12 ou d'une composition pulvérulente d'insecticide selon la revendication 14, pour la lutte contre des insectes nuisibles.

16. Utilisation d'une composition aqueuse d'insecticide selon l'une quelconque des revendications 1 à 12 ou d'une composition pulvérulente d'insecticide selon la revendication 14, pour la protection de matériaux lignocellulosiques contre une attaque par des insectes nuisibles.

17. Procédé pour la protection de matériaux lignocellulosiques contre l'attaque ou la destruction par des insectes nuisibles, comprenant le traitement du matériau lignocellulosique par une composition aqueuse d'insecticide selon l'une quelconque des revendications 1 à 12 et/ou par une composition pulvérulente d'insecticide selon la revendication 14.

18. Procédé selon la revendication 16, dans lequel pour ce qui est du matériau cellulosique il s'agit de bois.
